(19)

Europäisches Patentamt

European Patent Office

Office européen des brevets

(11) **EP 2 695 925 A1**

(12) **EUROPEAN PATENT APPLICATION**

(43) Date of publication:
**12.02.2014 Bulletin 2014/07**

(21) Application number: **13179408.3**

(22) Date of filing: **06.08.2013**

(51) Int Cl.:
*C09J 7/02* *(2006.01)*      *C09J 133/08* *(2006.01)*
*C08K 7/22* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.08.2012 JP 2012175290**
**21.03.2013 JP 2013058413**

(71) Applicant: **NITTO DENKO CORPORATION**
**Ibaraki-shi, Osaka 567-8680 (JP)**

(72) Inventors:
• **Niwa, Masahito**
**Ibaraki-shi, Osaka 567-8680 (JP)**
• **Higuchi, Naoaki**
**Ibaraki-shi, Osaka 567-8680 (JP)**
• **Yamanaka, Eiji**
**Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Double-Sided Pressure-Sensitive Adhesive Sheet and Portable Electronic Device**

(57)      A double-sided pressure-sensitive adhesive sheet having a large push-out adhesive force and high impactproof reliability is provided. The double-sided-pressure-sensitive adhesive sheet includes a pressure-sensitive adhesive layer including an acrylic polymer (A) containing 9 to 30 mass% of building blocks derived from a polar monomer.

FIG.1

**Description**

Field

The present invention described in this specification relates to a double-sided pressure-sensitive adhesive sheet and a portable electronic device.

Background

Double-sided pressure-sensitive adhesive sheets have been widely used in various fields. For examples, double-sided pressure-sensitive adhesive sheets are used to fix members installed in portable electronic devices such as mobile phones and handheld terminals. As an example of such pressure-sensitive adhesive sheets, a double-sided pressure-sensitive adhesive sheet that fixes a protective panel (or a lens) protecting a display of a portable electronic device to a chassis is disclosed in Patent Document 1. The double-sided pressure-sensitive adhesive sheet is sandwiched between the protective panel and the chassis and attached to the protective panel and the chassis. As a result, the protective panel is fixed to the chassis.
Patent Document 1: Japanese Unexamined Patent Application Publication No. 2009-108314
When double-sided pressure-sensitive adhesive sheets are used to fix members installed in portable electronic devices, a certain strength of adhesive force to properly maintain the fixation of the members is required not only when the portable electronic devices are in normal conditions without any damages but also when the portable electronic devices are deformed by external forces. The members in electronic devices may be deformed when users sit in chairs while the electronic devices in their back pockets and press down the electronic device with their hips. Even in such a case, the double-sided pressure-sensitive adhesive sheets are expected to maintain the fixation of the members. Namely, the double-sided pressure-sensitive adhesive sheets are expected to have certain strength of adhesive forces to maintain the fixation even when the members in the portable electronic devices are deformed.
In recent years, display sizes (or areas of displays) of portable electronic devices are increasing and thus members that are fixed by double-sided pressure-sensitive adhesive sheets are increasing in size. Namely, weights of those members are increasing. Although the members are increasing in size, adhesive areas (fixing areas) of the double-sided pressure-sensitive adhesive sheets have a tendency to decrease in size for design purposes. The double-sided pressure-sensitive adhesive sheets are expected to have sufficient adhesive forces in small adhesive areas. Because of such circumstances, the double-sided pressure-sensitive adhesive sheets are expected to have stronger forces.
In addition to the adhesive forces described above, the double-sided pressure-sensitive adhesive sheets are expected to have impactproof reliability as disclosed in Patent Document 1. The impactproof reliability is another adhesive ability with which the double-sided pressure-sensitive adhesive sheets maintain the fixation of the members even when large instantaneous impacts are applied to the portable electronic devices when dropped.

Summary

A double-sided pressure-sensitive adhesive sheet includes a pressure-sensitive adhesive layer including an acrylic polymer (A) containing 9 to 30 mass% of building blocks derived from at least one kind of polar monomer.
The double-sided pressure-sensitive adhesive sheet is configured for use in a portable electronic device to fix a member installed in the portable electronic device.
The double-sided pressure-sensitive adhesive sheet has a shape selected from the group consisting of a tape shape, a slip shape, a U shape, an L shape, and a frame shape.
The acrylic polymer (A) contains building blocks derived from (meth)acrylic acid alkyl ester including any one of a linear-chain alkyl group with a carbon number of 1 to 20 and a branched-chain alkyl group with a carbon number of 1 to 20.
The at least one kind of polar monomer is selected from the group consisting of a carboxyl group-containing monomer, a hydroxyl group-containing monomer, an amide group-containing monomer, and a heterocycle-containing vinyl monomer.
The acrylic polymer (A) contains building blocks derived from a polyfunctional monomer including at least two polymerizable functional groups.
The pressure-sensitive adhesive layer has a content of bubbles equal to or lower than 3 volume%
The pressure-sensitive adhesive layer has a thickness of 90 $\mu$m to 1,500 $\mu$m.
The pressure-sensitive adhesive layer further includes a thermal forming agent.
A portable electronic device includes a member fixed by the double-sided pressure-sensitive adhesive sheet.
According to aspects of the present invention, the problems of known double-sided pressure-sensitive adhesive sheets can be resolved and double-sided pressure-sensitive adhesive sheets having large push-out adhesive forces and high impactproof reliability can be provided.

Brief Description of Drawings

FIG. 1 is a schematic cross-sectional view illustrating of a double-sided pressure-sensitive adhesive sheet according to an embodiment.
FIG. 2 is a schematic top view of a sample used for measuring a push-out adhesive force.
FIG. 3 is a cross-sectional view of the sample in FIG. 2 cut along line A-A.
FIG. 4 is a schematic cross-sectional view illustrating a method of measuring the push-out adhesive force.
FIG. 5 is a schematic top view of a sample used for evaluating impactproof reliability.
FIG. 6 is a cross-sectional view of the sample in FIG. 5 cut along line B-B.
FIG. 7 is a schematic cross-sectional view illustrating a method of evaluating the impactproof reliability.

Description

Objects of technologies described herein include, but not limited to, solving problems of known double-sided pressure-sensitive adhesive sheets and providing double-sided pressure-sensitive adhesive sheets having large push-out adhesive forces and high impactproof reliability can be provided.
A double-sided pressure-sensitive adhesive sheet includes at least one layer of pressure-sensitive acrylic adhesive (hereinafter may be referred to as a pressure-sensitive adhesive layer). A double-sided pressure-sensitive adhesive sheet may be called by different terms such as a double-sided adhesive tape and a double-sided adhesive film. In this specification, the term "double-sided pressure-sensitive adhesive sheet" will be used throughout the text. A surface of the pressure-sensitive adhesive layer of the double-sided pressure-sensitive adhesive sheet may be referred to as a pressure-sensitive adhesive surface.
The double-sided pressure-sensitive adhesive sheet may be a substrate-less double-sided pressure-sensitive adhesive sheet that does not include a substrate (or a base member) or a double-sided pressure-sensitive adhesive sheet with substrate that includes a substrate. The substrate-less double-sided pressure-sensitive adhesive sheet includes pressure-sensitive adhesive layers without a base member. The double-sided pressure-sensitive adhesive sheet with substrate that includes a substrate is such as a pressure-sensitive adhesive sheet including a substrate and pressure-sensitive adhesive layers on both surfaces of the substrate. The substrate may be a substrate other than a form substrate (i.e., a non-form substrate that does not have hollows such as bubbles).
The double-sided pressure-sensitive adhesive sheet can include other layers (e.g., an intermediate layer and an undercoat) as long as the double-sided pressure-sensitive adhesive sheet is within a scope of the technology described herein. In this embodiment, a substrate-less double-sided pressure-sensitive adhesive sheet including only pressure-sensitive adhesive layers is used because the substrate-less double-sided pressure-sensitive adhesive sheet is more likely to exert a large push-out adhesive force and high impactproof reliability. A pressure-sensitive adhesive layer of the double-sided pressure-sensitive adhesive sheet will be explained.
Acrylic Pressure-Sensitive Adhesive Layer
The acrylic pressure-sensitive adhesive layer is a layer that provides pressure-sensitive adhesive surfaces of the double-sided pressure-sensitive adhesive sheet. A main component of the acrylic pressure-sensitive adhesive layer is an acrylic polymer (A). The pressure-sensitive adhesive layer may contain other components as necessary. The acrylic polymer (A) and other components will be explained.
Acrylic Polymer (A)
The pressure-sensitive adhesive layer includes the acrylic polymer (A) as a base polymer (main component). It is preferable that the pressure-sensitive adhesive layer contains 50 mass% or more of the acrylic polymer (A). More preferably, the pressure-sensitive adhesive layer contains 60 mass% or more of the acrylic polymer (A). Further more preferably, the pressure-sensitive adhesive layer contains 75 mass% or more of the acrylic polymer (A). Still further more preferably, the pressure-sensitive adhesive layer contains 85 mass% or more of the acrylic polymer (A). Although the upper limit is not limited to a specific value, it is preferable that the upper limit is set to 100 mass% or lower, more preferably, 95 mass% or lower.
The acrylic polymer (A) contains 9 to 30 mass% of building blocks derived from a polar monomer (a2). The acrylic polymer (A) also contains building blocks derived from (meth)acrylic acid alkyl ester (a1) including a linear-chain alkyl group or a branched-chain alkyl group with a carbon number of 1 to 20 (hereinafter referred to as (meth)acrylic acid alkyl ester (a).
A percentage (or mass%) of the building blocks derived from (meth)acrylic acid alkyl ester (a1) in the acrylic polymer (A) is preferably from 65 to 91 mass%, more preferably, from 68 to 91 mass%, further more preferably, from 70 to 91 mass%.

A percentage of an amount (or mass%) of (meth)acrylic acid alkyl ester (a1) over a total mass of all monomer components used for forming the acrylic polymer (A) is preferably from 65 to 91 mass%, more preferably from 68 to 91 mass%, further more preferably from 70 to 91 mass%.

Examples of the (meth)acrylic acid alkyl ester (a1) include (meth)acrylic acid methyl, (meth)acrylic acid ethyl, (meth)acrylic acid propyl, (meth)acrylic acid isopropyl, (meth)acrylic acid n-butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl. The (meth)acrylic acid alkyl ester (a1) compounds can be used alone or in a combination of two or more kinds. In this specification, the term "(meth)acrylic" expresses acrylic and/or methacrylic (i.e., any one of or both of acrylic and methacrylic).

A (meth)acrylic acid alkyl ester including an alkyl group with a carbon number of 1 to 14 is preferred for the (meth)acrylic acid alkyl ester (a1). An acrylic acid n-butyl (BA), (meth)acrylic acid 2-ethylhexyl (2EHA), (meth)acrylic acid isooctyl, and (meth)acrylic acid isononyl are more preferred.

The polar monomer (a2) is a monomer that has at least one kind of polar group and polymerizable unsaturated bonds.

If the percentage of the mass (or mass%) of the building blocks derived from the polar monomer (a2) is from 9 to 30 mass%, a large push-out adhesive force and high impactproof reliability of the double-sided pressure-sensitive adhesive sheet (or of the pressure-sensitive adhesive layer) are achieved.

A percentage of an amount (or mass%) of the polar monomer (a2) over a total mass of all monomer components used for forming the acrylic polymer (A) is from 9 to 30 mass%.

Examples of the polar monomer (a2) include: carboxyl group-containing monomers such as (meth)acrylic acid, itaconic acid, maleic acid, fumaric acid, crotonic acid, isocrotonic acid, and anhydrides of these acids (acid anhydride group-containing monomers, e.g., maleic anhydride and itaconic anhydride); hydroxyl group-containing monomers such as (meth)acrylic acid 2-hydroxyethyl, (meth)acrylic acid 3-hydroxypropyl, (meth)acrylic acid 4-hydroxybutyl, (meth)acrylic acid 6-hydroxyhexyl, vinyl alcohol, and allyl alcohol; amide group-containing monomers such as (meth)acrylamide, N,N-dimethyl(meth)acrylamide, N-methylol(meth)acrylamide, N-methoxymethyl(meth)acrylamide, N-butoxymethyl(meth)acrylamide, and N-hydroxyethyl(meth)acrylamide; amino group-containing monomers such as (meth)acrylic acid aminoethyl, (meth)acrylic acid dimethylaminoethyl, and (meth)acrylic acid t-butylaminoethyl; epoxy group-containing monomers such as (meth)acrylic acid glycidyl, and (meth)acrylic acid methylglycidyl; cyano group-containing monomers such as acrylonitrile, and methacrylonitrile; heterocycle-containing vinyl monomers such as N-vinyl-2-pyrrolidone, (meth)acryloyl morpholine, N-vinylpiperidone, N-vinylpiperazine, N-vinylpyrrole, and N-vinylimidazole; sulfonate group-containing monomers such as vinyl sulfonate sodium; phosphate group-containing monomers such as 2-hydroxyethyl acryloyl phosphate; imide group-containing monomers such as cyclohexyl maleimide and isopropylmaleimide; and isocyanate group-containing monomers such as 2-methacryloyloxyethyl isocyanate. A single kind of the polar monomer (a2) compounds can be used alone or in a combination of two or more kinds.

Carboxyl group-containing monomers, hydroxyl group-containing monomers, amide group-containing monomers, and heterocycle-containing vinyl monomers are preferred for the polar monomer (a2). Acrylic acid (AA), acrylic acid 2-hydroxyethyl ester (HEA), N-hydroxyethyl acrylamide (HEAA), and N-vinyl-2-pyrrolidone (NVP) are more preferred.

Another preferred embodiment may be a combination of at least one kind of acid group-containing monomer and at least one kind of basic group-containing monomer. The at least one kind of acid group-containing monomer may be selected from those in a group of carboxyl group-containing monomers and hydroxyl group-containing monomers. The at least one kind of basic group-containing monomer may be selected from those in a group of amide group-containing monomers and heterocycle-containing vinyl monomers.

The acrylic polymer (A) is one kind of copolymerizable monomers. The acrylic polymer (A) may contain building blocks derived from polyfunctional monomers (a3) having at least two polymerizable functional groups with unsaturated double bonds (hereinafter referred to as polyfunctional monomers (a3)).

Examples of the polyfunctional monomers (a3) include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, and urethane acrylate. The polyfunctional monomers (a3) compounds can be used alone or in a combination of two or more kinds. Polyfunctional (meth)acrylates may be preferred for the polyfunctional monomers (a3).

A percentage (or mass%) of the building blocks derived from polyfunctional monomers (a3) in the acrylic polymer (A) is preferably from 0.01 to 0.5 mass%, more preferably, from 0.02 to 0.3 mass%. If the percentage of the mass (or mass%) of the building blocks derived from the polyfunctional monomers (a3) is from 0.01 to 0.5 mass%, the pressure-sensitive adhesive layer can have an appropriate level of cohesion and thus the push-out adhesive force and impactproof reliability are less likely to decrease.

A percentage of an amount (or mass%) of the polyfunctional monomers (a3) over a total mass of all monomer components used for forming the acrylic polymer (A) is preferably from 0.01 to 0.5 mass%, more preferably from 0.02 to 0.3 mass%.

If the building blocks derived from the polyfunctional monomers (a3) are contained in the acrylic polymer (A), that is, the acrylic polymer (A) contains cross-linking acrylic polymer, higher cohesion in the pressure-sensitive adhesive layer and higher adhesive force can be achieved.

Copolymerizable monomers other than polyfunctional monomers (a3) may be used for the monomer components for forming the acrylic polymer (A). Examples of the copolymerizable monomers include: (meth)acrylic acid esters having an alicyclic hydrocarbon group such as cyclopentyl (meth) acrylate, cyclohexyl (meth) acrylate, and isobornyl (meth) acrylate; (meth)acrylic acid esters having an aromatic hydrocarbon group such as phenyl (meth) acrylate, which are different from the (meth)acrylic acid alkyl ester (a1); vinyl esters such as vinyl acetate and vinyl propionate; aromatic vinyl compounds such as styrene and vinyl toluene; olefins or dienes such as ethylene, butadiene, isoprene, and isobutylene; vinyl ethers such as vinyl alkyl ether; and vinyl chloride.

An amount (or mass%) of the acrylic polymer (A) contained in the pressure-sensitive adhesive layer is from 50 to 100 mass%.

The acrylic polymer (A) can be prepared by a publicly known or commonly used polymerization method. Examples of such a method include solution polymerization, emulsion polymerization, mass polymerization, and photopolymerization. It is preferable to use a curing reaction caused by heat or active energy rays (e.g., ultraviolet rays) with a polymerization initiator such as a thermal polymerization initiator or a photopolymerization initiator in preparation of the acrylic polymer (A). Especially, because of the short polymerization period, it is preferable to use a curing reaction with a photopolymerization initiator.

The acrylic polymer (A) can be prepared by polymerizing a monomer composition containing a photopolymerization initiator with an active energy rays (e.g., ultraviolet rays) applied thereto. In the preparation of the acrylic polymer (A), other components to be included in the pressure-sensitive adhesive layer may be added in addition to the polymerization initiator. The polymerization initiator such as a thermal polymerization initiator or a photopolymerization initiator used for preparation of the acrylic polymer (A) compounds can be used alone or in a combination of two or more kinds.

Examples of the thermal polymerization initiator include: azo polymerization initiators such as 2,2'-azobisisobutyronitrile, 2,2'-azobis-2-methylbutyronitrile, 2,2'-azobis(2-methylpropionic acid)dimethyl, 4,4'-azobis-4-cyanovalerianic acid), azobis isovaleronitrile, 2,2'-azobis(2-amidinopropane)dihydrochloride, 2,2'-azobis[2-(5-methyl-2-imidazoline-2-yl)propane]dihydrochloride, 2,2'-azobis(2-methylpropionamidine)disulfate, and 2,2'-azobis (N,N'-dimethyleneisobutylamidine)dihydrochloride; peroxide polymerization initiators such as dibenzoyl peroxide, t-butyl permaleate, and lauroyl peroxide; and redox polymerization initiators. The amount of the thermal polymerization initiator is not limited to a specific amount and may be any amount within a normal range in which the thermal polymerization initiator can be normally used.

Examples of the photopolymerization initiator include benzoin ether photopolymerization initiators, acetophenone photopolymerization initiators, $\alpha$-ketol photopolymerization initiators, aromatic sulfonyl chloride photopolymerization initiators, photoactive oxime photopolymerization initiators, benzoin photopolymerization initiators, benzyl photopolymerization initiators, benzophenone photopolymerization initiators, ketal photopolymerization initiators, thioxanthone photopolymerization initiators, and acylphosphine oxide photo-polymerization initiators.

Examples of the benzoin ether photopolymerization initiators include: benzoin methyl ether; benzoin ethyl ether; benzoin propyl ether; benzoin isopropyl ether; benzoin isobutyl ether; 2,2-dimethoxy-1,2-diphenylethane-1-one (IRGACURE 651 manufactured by BASF); and anisole methyl ether. Examples of the acetophenone photopolymerization initiators include: 1-hydroxycyclohexyl phenyl ketone (IRGACURE 184 manufactured by BASF); 4-phenoxy dichloroacetophenone; 4-t-butyl-dichloroacetophenone; 1-[4-(2-hydroxyethoxy)-phenyl]-2-hydroxy-2-methyl-1-propane-1-one (IRGACURE 2959 manufactured by BASF); 2-hydroxy-2-methyl-1-phenyl-propane-1-one (DAROCUR 1173 manufactured by BASF); and methoxy acetophenone. Examples of the $\alpha$-ketol photopolymerization initiators include: 2-methyl-2-hydroxy propiophenone; and 1-[4-(2-hydroxyethyl)-phenyl]-2-hydroxy-2-methylpropane-1-one.

Examples of the aromatic sulfonyl chloride photopolymerization initiators include 2-naphthalene sulfonyl chloride. Examples of the photoactive oxime photopolymerization initiators include 1-phenyl-1,1-propanedione-2-(o-ethoxycarbonyl)-oxime. Examples of the benzoin photopolymerization initiators include benzoin. Examples of the benzyl photopolymerization initiators include benzyl. Examples of the benzophenone photopolymerization initiators include: benzophenone; benzoylbenzoic acid; 3,3'-dimethyl-4-methoxybenzophenone; polyvinyl benzophenone; and $\alpha$-hydroxy cyclohexyl phenyl ketone. Examples of the ketal photopolymerization initiators include benzyldimethyl ketal. Examples of the thioxanthone photopolymerization initiators include: thioxanthone; 2-chlorothioxanthone; 2-methyl thioxanthone;

2,4-dimethyl thioxanthone; isopropyl thioxanthone; 2,4-dichloro thioxanthone; 2,4-diethyl thioxanthone; isopropyl thioxanthone; 2,4-diisopropyl thioxanthone; and dodecyl thioxanthone.

Examples of the acylphosphine oxide photo-polymerization initiators include: bis(2,6-dimethoxybenzoyl)phenylphosphine oxide; bis(2,6-dimethoxybenzoyl)(2,4,4-trimethylpentyl)phosphine oxide; bis(2,6-dimethoxybenzoyl)-n-butyl phosphine oxide; bis(2,6-dimethoxybenzoyl)-(2-methylpropane-1-yl)phosphine oxide; bis(2,6-dimethoxybenzoyl)-(1-methylpropane-1-yl)phosphine oxide; bis(2,6-dimethoxybenzoyl)-t-butylphosphine oxide; bis(2,6-dimethoxybenzoyl)cyclohexylphosphine oxide; bis(2,6-dimethoxybenzoyl)octylphosphine oxide; bis(2-methoxybenzoyl)(2-methylpropane-1-yl)phosphine oxide; bis(2-methoxybenzoyl)(1-methylpropane-1-yl)phosphine oxide; bis(2,6-diethoxybenzoyl)(2-methylpropane-1-yl)phosphine oxide; bis(2,6-diethoxybenzoyl)(1-methylpropane-1-yl)phosphine oxide; bis(2,6-dibutoxybenzoyl)(2-methylpropane-1-yl)phosphine oxide; bis(2,4-dimethoxybenzoyl)(2-methypropane-1-yl)phosphine oxide; bis(2,4,6-trimethylbenzoyl)(2,4-dipentoxyphenyl)phosphine oxide; bis(2,6-dimethoxybenzoyl)benzyl phosphine oxide; bis(2,6-dimethoxybenzoyl)-2-phenylpropyl phosphine oxide; bis(2,6-dimethoxybenzoyl)-2-phenylethyl phosphine oxide; bis(2,6-dimethoxybenzoyl)benzyl phosphine oxide; bis(2,6-dimethoxybenzoyl)-2-phenylpropyl phosphine oxide; bis(2,6-dimethoxybenzoyl)-2-phenylethyl phosphine oxide; 2,6-dimethoxybenzoyl benzylbutylphosphine oxide; 2,6-dimethoxybenzoyl benzyloctylphosphine oxide; bis(2,4,6-trimethylbenzoyl)-2,5-diisopropylphenylphosphine oxide; bis(2,4,6-trimethylbenzoyl)-2-methylphenylphosphine oxide; bis(2,4,6-trimethylbenzoyl)-4-methylphenylphosphine oxide; bis(2,4,6-trimethylbenzoyl)-2,5-diethylphenylphosphine oxide; bis(2,4,6-trirnethylbenzoyl)-2,3,5,6-tetramethylphenylphosphine oxide; bis(2,4,6-trimethyl benzoyl)-2,4-di-n-butoxy phenylphosphine oxide; 2,4,6-trimethylbenzoyl diphenylphosphine oxide; bis(2,6-dimethoxybenzoyl)-2,4,4-trimethylpentylphosphine oxide; bis(2,4,6-trimethylbenzoyl)isobutylphosphine oxide; 2,6-dimethoxybenzoyl-2,4,6-trimethylbenzoyl-n-butylphasphine oxide; bis(2,4,6-trimethylbenzoyl)phenylphosphine oxide; bis(2,4,6-trimethylbenzoyl)-2,4-dibutoxyphenylphosphine oxide; 1,10-bis[bis(2,4,6-trimethylbenzoyl)phosphine oxide]decane; and tri(2-methylbenzoyl)phosphine oxide.

The amount of photopolymerization initiator is not limited to a specific amount as long as the acrylic polymer (A) can be formed by the photopolymerization reaction. For example, parts by mass of photopolymerization initiator over 100 parts by mass of all monomer components used for forming the acrylic polymer (A) is preferably from 0.01 to 5 parts by mass, more preferably from 0.03 to 3 parts by mass, further more preferably from 0.05 to 2 parts by mass.

If the amount of photopolymerization initiator is from 0.01 to 5 parts by mass, a sufficient level of polymerization reaction can be performed and thus the molecular weight of polymer is less likely to decrease when the polymer is formed. Therefore, the cohesion force of the pressure-sensitive adhesive layer can be obtained when the pressure-sensitive adhesive layer is formed.

During the activation of the photopolymerization initiator, it is important to irradiate the active energy rays to the monomer composition containing the photopolymerization initiator. Examples of such active energy rays include: ionization radiations such as alpha rays, beta rays, gamma rays, neutron rays, and electron rays; and ultraviolet rays. Especially, the ultraviolet rays are preferred. An amount, time, and a method of irradiation of the active energy rays are not limited to specific amount, time, and method as long as a reaction of monomer component occurs by activating the photopolymerization initiator.

A weight-average molecular weight (Mw) of the acrylic polymer (A) may be from 100,000 to 5,000,000. The weight-average molecular weight (Mw) of the acrylic polymer (A) may be measuring by the gel permeation chromatography (GPC) in terms of polystyrene standard. Specifically, the weight-average molecular weight of the acrylic polymer (A) is measured at a flow rate of 0.5 ml/min with tetrahydrofuran solvent by HPLC8020 manufactured by Tosoh Corporation using TSKgelGMH-H and (20) × 2 as a column.

Other Components

Acrylic Polymer (B)

The pressure-sensitive adhesive layer may contain an acrylic polymer (B) other than the acrylic polymer (A). The acrylic polymer (B) is a polymer having a weight-average molecular weight smaller than that of the acrylic polymer (A). The acrylic polymer (B) contains building blocks derived from (meth)acrylic acid ester.

Examples of (meth)acrylic acid ester include: linear-chain or branched-chain (meth)acrylic acid alkyl ester with a carbon number of 1 to 12 such as (meth)acrylic acid methyl, (meth)acrylic acid ethyl, (meth)acrylic acid propyl, (meth)acrylic acid butyl, (meth)acrylic acid isobutyl, (meth)acrylic acid pentyl, (meth)acrylic acid hexyl, (meth)acrylic acid-2-ethylhexyl, (meth)acrylic acid octyl, (meth)acrylic acid nonyl, (meth)acrylic acid decyl, and (meth)acrylic acid dodecyl; esters of (meth)acrylic acids with alicyclic alcohols such as cyclohexyl (meth) acrylate and (meth)acrylic acid isobornyl; and (meth)acrylic acid aryl esters such as (meth)acrylic acid phenyl and (meth)acrylic acid benzyl. The (meth)acrylic acid ester compounds can be used alone or in a combination of two or more kinds.

The following compounds may be used as a monomer component (monomer unit) of the acrylic polymer (B): (meth)acrylic acid esters having an alicyclic hydrocarbon group such as cyclohexyl methacrylate (CHMA), dicyclopentanyl methacrylate (DCPMA), and dicyclopentanyl acrylate (DCPA); and (meth)acrylic acid alkyl ester including a linear-chain or a branched-chain alkyl group with a carbon number of 1 to 12 (more preferably, (meth)acrylic acid alkyl ester including a linear-chain or a branched-chain alkyl group with a carbon number of 1 to 8 such as isobutyl methacrylate).

Other than the (meth)acrylic acid esters described above, the acrylic polymer (B) can be prepared by copolymerizing copolymerizable monomers having polymerizable unsaturated bonds that enable copolymerization with the (meth)acrylic acid alkyl ester.

A percentage of a mass (or mass%) of the (meth)acrylic acid alkyl ester in the acrylic polymer (B) is preferably from 90 to 100 mass%, more preferably from 95 to 100 mass%.

A percentage of an amount (or mass%) of the (meth)acrylic acid alkyl ester over a total mass of all monomer components used for forming the acrylic polymer (B) is from 90 to 100 mass%, more preferably from 95 to 100 mass%.

The following copolymers may be used for the acrylic polymer (B): copolymer of cyclohexyl methacrylate (CHMA) and isobutyl methacrylate (IBMA); copolymer of cyclohexyl methacrylate (CHMA) and isobornyl methacrylate (IBXMA); copolymer of cyclohexyl methacrylate (CHMA) and acryloyl morpholine (ACMO); copolymer of cyclohexyl methacrylate (CHMA) and diethylacrylamide (DEAA); and copolymer of dicyclopentanyl methacrylate (DCPMA) and methylmethacrylate (MMA).

A percentage of a mass (or mass%) of the (meth)acrylic acid alkyl ester containing the alicyclic hydrocarbon group, such as CHMA and DCPMA, in the acrylic polymer (B) is preferably from 50 to 85 mass%, more preferably from 55 to 75 mass%.

A percentage of an amount (or mass%) of the (meth)acrylic acid alkyl ester containing the alicyclic hydrocarbon group over a total mass of all monomer components used for forming the acrylic polymer (B) is from 50 to 85 mass%, more preferably from 55 to 75 mass%.

A weight-average molecular weight of the acrylic polymer (B) is preferably from 1,000 to 30,000, more preferably, from 2,500 to 15,000, further more preferably, from 3,000 to 10,000.

If the weight-average molecular weight of the acrylic polymer (B) is from 1,000 to 30,000, compatibility with the acrylic polymer (A) can be achieved. Therefore, appropriate levels of the adhesion and the retention capacity of the pressure-sensitive adhesive layer can be obtained when the pressure-sensitive adhesive layer is formed.

The weight-average molecular weight of the acrylic polymer (B) may be measuring by the GPC in terms of polystyrene standard. Specifically, the weight-average molecular weight of the acrylic polymer (B) is measured at a flow rate of 0.5 ml/min with tetrahydrofuran solvent by HPLC8020 manufactured by Tosoh Corporation using TSKgelGMH-H and (20) × 2 as a column.

Parts by mass of the acrylic polymer (B) over 100 parts by mass of all monomer components used for forming the acrylic polymer (A) is preferably from 10 to 40 parts by mass, more preferably from 5 to 35 parts by mass. If the amount of the acrylic polymer (B) from 10 to 40 parts by mass, compatibility with the acrylic polymer (A) can be achieved. Therefore, appropriate levels of the adhesion and the retention capacity of the pressure-sensitive adhesive layer can be obtained when the pressure-sensitive adhesive layer is formed.

A glass transition temperature (Tg) of the acrylic polymer (B) is preferably from 40 to 300 °C. If the glass transition temperature (Tg) is from 40 to 300 °C, an appropriate cohesion force can be achieved at room temperature or higher and appropriate levels of the adhesion and the retention capacity can be obtained.

The glass transition temperature (Tg) may be obtained from nominal values in reference documents or calculated by the following calculation formula (Fox formula).

$$1/Tg = \sum(Wi/Tgi) \qquad (1)$$

Where Tg is a glass transition temperature (unit: K) of the acrylic polymer (B), Tgi is a glass transition temperature (unit: K) of a homopolymer of a monomer i, and Wi is a mass fraction that expresses the ratio of the mass of the monomer i to the mass of the total monomer components (i = 1, 2, ....., n). This formula is for the acrylic monomer (B) including monomer 1, monomer 2, ....., and monomer n, that is, n kinds of monomers.

The acrylic polymer (B) may be prepared by copolymerizing monomer components such as (meth)acrylic acid ester using publicly known or commonly used polymerization process such as solution polymerization, bulk polymerization, emulsion polymerization, suspension polymerization, and mass polymerization.

To adjust the molecular weight of the acrylic polymer (B), a chain transfer agent may be used during the polymerization of the acrylic polymer (B). Examples of the chain transfer agent include: compounds having a mercapt group such as octylmercaptan, dodecyl mercaptan, t-dodecyl mercaptan; thioglycolic acid; ethyl thioglycolate; propyl thioglycolate; butyl thioglycolate; t-butyl thioglycolate; 2-ethylhexyl thioglycolate; octyl thioglycolate; decyl thioglycolate; dodecyl thioglycolate; thioglycolic acid esters of ethylene glycol; thioglycolic acid ester of neopentyl glycol; and thioglycolic acid ester of pentaerythritol. Especially, thioglycolic acids may be preferred among the examples of the chain transfer agent.

The amount of the chain transfer agent is not limited to a specific amount. The amount of the chain transfer agent is usually from 0.1 to 20 parts by mass, preferably, from 0.2 to 15 parts by mass, more preferably, from 0.3 to 10 parts by mass, over 100 parts by mass of all monomer components used for forming the acrylic polymer (B). By adjusting the amount of the chain transfer agent, as described above, the acrylic polymer (B) having a preferred molecular weight can be prepared.

A method of mixing the acrylic polymer (B) into the pressure-sensitive adhesive layer is not limited to a specific method. It is preferable to use a method of mixing the acrylic polymer (B) into a monomer composition used for preparing the acrylic polymer (A) together with the polymerization initiator.

Hydrogenated Tackifying Resin

Any kind of tackifying resin such as hydrogenated tackifying resin may be included in the pressure-sensitive adhesive layer as a component other than the acrylic polymer (A). Examples of the hydrogenated tackifying resin include derivatives prepared by hydrogenating tackifying resins such as petroleum resins, terpene resins, coumarone-indene resins, styrene resins, rosin resins, alkyl phenol resins, and xylene resins. The hydrogenated petroleum resin may be selected from an aromatic system, a dicyclopentadiene system, an aliphatic system, and copolymers of aromatic system and dicyclopentadiene system. The hydrogenated terpene resin may be selected from a terpene phenol resin and an aromatic terpene resin. The hydrogenated petroleum resin or the hydrogenated terpene resin is especially preferred for the hydrogenated tackifying resin.

The softening point of the hydrogenated tackifying resin is preferably from 80 °C to 200 °C, more preferably, from 100 °C to 200 °C. If the softening point of the hydrogenated tackifying resin is from 80 °C to 200 °C, a high cohesion force can be obtained.

The amount of the hydrogenated tackifying resin may be from 1 to 50 parts by mass, preferably, from 2 to 40 parts by mass, more preferably, from 3 to 30 parts by mass, over 100 parts by mass of all monomer components used for forming the acrylic polymer (A). If the amount of the hydrogenated tackifying resin is from 1 to 50 parts by mass, the adhesion of the pressure-sensitive adhesive layer improves while an appropriate cohesion force is maintained.

Examples of the hydrogenated tackifying resin on the market include: Alcon P-125 (hydrogenated tackifying resin, manufactured by Arakawa Chemical Industries, Ltd.); and YS Polyster TH130 (hydrogenated terpene phenol resin, manufactured by YASUHARA CHEMICAL Co., Ltd.)

Additive

An additive may be included in the pressure-sensitive adhesive layer as a component other than the acrylic polymer (A). The additive may be included in the pressure-sensitive adhesive layer to improve various capabilities including reinforcement, workability, easiness in handling, and adhesiveness. The additive is not limited to a specific additive. Examples of the additive include: metal powders such copper, nickel, aluminum, chromium, iron, and stainless steel powders); carbonate such as calcium carbonate (e.g., ground calcium carbonate, precipitated calcium carbonate), magnesium carbonate, sodium carbonate, and potassium carbonate; hydroxide such as aluminum hydroxide and magnesium hydroxide; talc; mica; clay; bentonite; silica; alumina; aluminum silicate; oxidized titanium; and hollow microspheres. The additive compounds can be used alone or in a combination of two or more kinds.

Examples of the hollow microspheres include inorganic hollow microspheres and organic hollow microspheres. Examples of the inorganic hollow microspheres include: hollow balloons made of glass such as hollow glass balloons; hollow balloons made of metal compound such as hollow alumina balloons; and hollow balloons made of porcelain such as hollow ceramic balloons. Examples of the organic hollow microspheres include resin hollow balloons such as hollow acrylic balloons and hollow vinylidene chloride balloons. The hollow microspheres can be used alone or in a combination of two or more kinds.

Inorganic hollow microspheres may be selected from hollow microspheres in terms of polymerization efficiency in polymerization by active energy rays (especially ultraviolet rays) and gravity. Hollow glass balloons may be preferred. If the hollow glass microspheres are used, an adhesive ability of the pressure-sensitive adhesive layer can be improved without reducing other abilities such as a shearing force and a holding ability. Examples of hollows glass balloons in the market include Fuji balloon H-40 manufactured by FUJI SILYSIA CHEMICAL LTD., and Sphericel® 25P45 (silicate glass balloons, manufactured by Potters-Ballotini Co., Ltd.). The surfaces of the hollow microspheres may be subjected to various surface treatments (e.g., low surface tension treatment by silicone compound or fluorine compound).

A particle diameter (mean particle diameter) of the additive is not limited to a specific size. A preferable particle diameter may be from 0.1 $\mu$m to 500 $\mu$m, more preferably, from 0.1 $\mu$m to 200 $\mu$m, further more preferably, from 0.1 $\mu$m to 80 $\mu$m.

A specific gravity (true density) of the additive is not limited to a specific value. A preferable specific gravity may be from 0.1 g/cm$^3$ to 5.0 g/cm$^3$, more preferably, from 0.15 g/cm$^3$ to 3.0 g/cm$^3$. If the specific gravity of the additive (especially, the specific gravity of hollow microspheres) is from 0.1 g/cm$^3$ to 3.0 g/cm$^3$, floating of the additive is less likely to occur during mixture thereof into the pressure-sensitive adhesive composition for forming the pressure-sensitive adhesive composition. Therefore, microspheres of the additive are more likely to be evenly dispersed in the pressure-sensitive adhesive composition.

The amount of the additive may be such that parts by mass thereof over 100 parts by mass of all monomer components used for forming the acrylic polymer (A) is preferably from 0.1 to 100 parts by mass, more preferably from 1 to 90 parts by mass. If the amount of the additive is such that the parts by mass thereof is from 0.1 to 100 parts by mass, the microspheres of the additive can be mixed and dispersed in the pressure-sensitive adhesive composition.

Furthermore, a thermal foaming agent may be included in the pressure-sensitive adhesive layer to add reattach ability (repair workability) to the double-sided pressure-sensitive adhesive sheet during use thereof. The thermal foaming agent may be included in the pressure-sensitive adhesive layer to add characteristics to the double-sided pressure-sensitive adhesive sheet such that an attachment portion thereof is easily removed or torn off (detachability). Examples of the thermal foaming agent include microspheres having thermal expandability (hereinafter referred to as thermally-expandable microspheres).

The thermally-expandable microspheres are microspheres that expand and/or form when heated. If the pressure-sensitive adhesive layer includes the thermally-expandable microspheres, the pressure-sensitive adhesive layer can have characteristics such that removal or torn-off occurs at a boundary between the pressure-sensitive adhesive layer of the double-sided pressure-sensitive adhesive sheet and an object to which the double-sided pressure-sensitive adhesive sheet is attached when heated. When heated, the thermally-expandable microspheres in the pressure-sensitive adhesive layer expand and/or form. As a result, the pressure-sensitive adhesive layer expands and deforms into a wavy shape. The removal or the torn-off occurs at the boundary between the pressure-sensitive adhesive layer and the object due to the deformation of the pressure-sensitive adhesive layer. Depending on material of the object, the adhesive force of the pressure-sensitive adhesive layer may be reduced or lost when the thermally-expandable microspheres in the pressure-sensitive adhesive layer expand and/or form by heat and the pressure-sensitive adhesive layer expands and deforms.

The removal or the torn-off may occur at the boundary between the pressure-sensitive adhesive layer and the object due to such a reason.

A heating process may be performed using a heating device such as a hot plate, a hot-air dryer, a near infrared light, and air dryer, as appropriate. A heating temperature may be set equal to or higher than a temperature at which the thermally-expandable microspheres start expanding. The heating temperature may be at an appropriate temperature in consideration of surface conditions of the object, the kind of the microspheres, a heat tolerance of the object, a heating method (heat capacity, type of heating device), and other factors. In general, the heating process may be performed at a temperature range of 100 to 250 °C for 5 to 90 seconds (e.g., by a hot plate) or for 5 to 15 minutes (e.g., by a hot-air dryer).

The thermally-expandable microspheres are not limited to any particular kinds as long as the thermally-expandable microspheres have characteristics that show expansion and/or form by heating. Publicly known thermally-expandable microspheres may be used where appropriate. Among the known thermally-expandable microspheres, microencapsulated thermally-expandable microspheres are especially preferred. Examples of the microencapsulated thermally-expandable microspheres include microspheres including elastic shells each containing a substance that is easily gasified by heating and expands such as isobutane, propane, and pentane.

The shell of the thermally-expandable particle is usually made of thermoplastic material, thermofusible material, or an explosive material that may explode due to thermal expansion. Examples of the material of the shell include vinylidene chloride acrylic nitrile copolymer, polyvinyl alcohol, polyvinyl butyral, polymethylmethacrylate, polyacrylonitrile, polyvinylidene chloride, and polysulfone. The thermally-expandable fine particle can be produced by a know method (e.g., a coacervation method, an interfacial polymerization).

Commercial thermally-expandable microspheres may be used. Such thermally-expandable microspheres are not limited to any particular ones. Examples of the commercial thermally-expandable microspheres include: Matsumoto Microsphere® F-30D, Matsumoto Microsphere® F-50D, Matsumoto Microsphere® F-80SD, and Matsumoto Microsphere® F-48D* manufactured by Matsumoto Yushi-Seiyaku Co., Ltd.; and Expancel® 051DU40 manufactured by Expancel.

A mean diameter of each thermally-expandable particle is not limited to any particular size. In consideration of dispersibility or thin layer forming, the mean diameter is preferably from 1 $\mu$m to 80 $\mu$m, more preferably from 3 $\mu$m to 50 $\mu$m.

To efficiently reduce a pressure-sensitive adhesive strength of the pressure-sensitive adhesive layer by heating, it is preferable to use thermally-expandable microspheres each having a proper strength so that each microsphere does not explore until a coefficient of thermal expansion becomes 5 times, more particularly, 10 times larger. If microspheres having characteristics to explore at a lower coefficient of thermal expansion or microspheres that are not encapsulated are used, the following problems may occur: proper detachability is not achieved because an adhesive area between a pressure-sensitive adhesive layer and an object to which the pressure sensitive adhesive layer is attached is not sufficiently reduced; and characteristics to be removed or torn off by heating (e.g., characteristics to be torn off at the boundary between a pressure-sensitive adhesive layer and a removable film layer) degrades.

Parts by mass of an amount of thermally-expandable microspheres over 100 parts by mass of all monomer components used for forming the acrylic polymer (A) may differ depending on the kind thereof. The parts by mass may be from 5 to 200 parts by mass, more preferably, from 8 to 125 parts by mass, further more preferably, from 10 to 100 parts by mass, still further more preferably, from 15 to 70 parts by mass, still further more preferably, from 20 to 50 parts by mass. If the parts by mass are in the above range, the pressure-sensitive adhesive layer can be sufficiently expanded by heating without cohesive failure and thus the removal and torn-off by heating can be properly performed.

Examples of thermal foaming agent that is another component included in the pressure-sensitive adhesive layer include various kinds of inorganic foaming agents and organic foaming agents. Examples of inorganic foaming agents include ammonium carbonate, ammonium hydrogencarbonate, sodium hydrogencarbonate, ammonium nitrite, sodium borohydride, and azides. Examples of organic foaming agents include water; alkane chloro fluoride such as trichloromonofluoromethane and dichloromonofluoromethane; azo-based compound such as azobisisobutyronitrile, azodicarbonamide, and barium azodicarboxylate; hydrazine-based compound such as paratoluenesulfonyl hydrazide, diphenylsulfone-3,3'-disulfonyl hydrazide, 4,4'-oxybis(benzenesulfonylhydrazide), and allylbis(sulfonylhydrazide); semicarbazide-based compound such as p-toluilene sulfonylsemicarbazide, and 4,4'-oxybis(benzenesulfonylsemicarbazide); triazole-based compound such as 5-morpholyl-1,2,3,4-thiatriazole; N-nitroso-based compound such as N,N'-dinitrosopentamethylenetetramine, and N,N'-dimethyl-N,N'-dinitrosoterephthalamide.

The forming agent can be used alone or in a combination of two or more kinds. Furthermore, the pressure-sensitive adhesive layer may contain a forming promoter as necessary.

Cross-Linking Agent

The pressure-sensitive adhesive layer may contain a cross-linking agent as a component other than the acrylic polymer (A) depending on the intended use. The cross-linking agent is used for adjusting the cohesion force of the pressure-sensitive adhesive layer. Examples of the cross-linking agent includes epoxy cross-linking agent, isocyanate cross-linking agent, silicone cross-linking agent, oxazoline cross-linking agent, aziridine cross-linking agent, silane cross-linking agent, alkyl-etherified melamine cross-linking agent, and metal chelate cross-linking agent. The isocyanate cross-linking agent and epoxy cross-linking agent may be preferred.

Examples of the isocyanate cross-linking agent include: tolylene diisocyanate; hexamethylene diisocyanate; isophorone diisocyanate; xylylene diisocyanate; hydrogenated xylylene diisocyanate; diphenylmethane diisocyanate; hydrogenated diphenylmethane diisocyanate; tetramethyl xylylene diisocyanate; naphthalene diisocyanate; triphenylmethane triisocyanate; polymethylene polyphenyl isocyanate; and adducts of one of the above compounds and polyols such as trimethylolpropane.

Examples of the epoxy cross-linking agent include: bisphenol A; epichlorohydrin type epoxy resin; ethyleneglycidylether; polyethylene glycol diglycidyl ether; glycerin diglycidyl ether; glycerin triglycidyl ether; 1,6-hexanediol glycidyl ether; trimethylolpropane triglycidyl ether; diglycidyl aniline; diamine glycidyl amine; N,N,N',N'-tetraglycidyl-m-xylylenediamine; and 1,3-bis(N,N'-diamine glycidyl aminomethyl)cyclohexane.

Other Components

The pressure-sensitive adhesive layer may include the following components as long as an intended effect can be achieved: cross-linking promoter; silane coupling agent; antioxidant; colorant (pigment, dye); ultraviolet absorbing agent; antioxidant; chain transfer agent; plasticizing agent; softener; antistatic agent; and solvent. These components can be used alone or in a combination of two or more kinds.

The colorant may be mixed into the pressure-sensitive adhesive layer as appropriate for adding optical characteristics (e.g., light-blocking effect) or design to the pressure-sensitive adhesive layer. To add a light-blocking effect to the pressure-sensitive adhesive layer, it may be preferable to use carbon black (e.g., acetylene black, Ketjenblack, furnace black, channel black, and thermal black), which is a black pigment. Parts by mass of an amount of the carbon black over 100 parts by mass of all monomer components used for forming the acrylic polymer (A) may be preferably from 0.01 to 10 parts by mass, more preferably, 0.1 to 5 parts by mass.

The pressure-sensitive adhesive layer may contain other type of adhesive as long as an intended effect can be achieved. Such adhesive includes pressure-sensitive acrylic adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, and epoxy pressure-sensitive adhesive. These pressure-sensitive adhesives can be used alone or in a combination of two or more kinds.

Configuration Not Substantively Including Bubbles

The pressure-sensitive adhesive layer may have a configuration that does not substantively include bubbles. In this specification, the phrase "does not substantively include bubbles" means that bubbles may be unintentionally included in the pressure-sensitive adhesive layer but not actively included therein. A content of bubbles in the pressure-sensitive adhesive layer is ideally zero. The content of bubbles in the actual pressure-sensitive adhesive layer is preferably equal to or less than 3 % by volume over an overall volume (100 % by volume) of the pressure-sensitive adhesive layer, more preferably, equal to or less than 1 % by volume. If the content of bubbles in the pressure-sensitive adhesive layer is equal to or less than 3 % by volume, the pressure-sensitive adhesive layer can have a proper hardness and thus have strength against deformation.

The content (volume%) of the bubbles in the pressure-sensitive adhesive layer can be measured by the following method.

Measurement Method

1. Prepare a sample for measurement by cutting the pressure-sensitive adhesive layer in the thickness direction while damage to a cut surface is maintained as small as possible. The sample may be prepared by soaking the pressure-sensitive adhesive layer in liquid nitrogen and rupturing the pressure-sensitive adhesive layer.

2. Magnify the surface of the sample (cut surface or ruptured surface) by 100 times by a field emission scanning electron microscope (FE-SEM), an S-4800 manufactured by Hitachi High-Technologies Corporation.

3. Calculate a total area S2 of bubbles in a reference area S1 1 in a box defined by a width of 1mm by a thickness of the pressure-sensitive adhesive layer in the magnified cut surface.

4. Calculate a percentage of bubbles in the cut surface by equation $(S2/S1) \times 100$.

5. Repeat the above steps 1 to 4 to obtain five samples at separate locations at equal intervals in one direction of the pressure-sensitive adhesive layer, and determine a mean of percentages of obtained samples as a content (volume%) of the bubbles in the pressure-sensitive adhesive layer.

Method of Forming Pressure-sensitive adhesive layer

The pressure-sensitive adhesive layer of this embodiment used for the double-sided pressure-sensitive adhesive sheet may be formed using pressure-sensitive adhesive composition. The composition is not limited to any particular one as long as the pressure-sensitive adhesive layer described above can be formed. The composition may be selected as appropriate for an intended purpose. In terms of workability, the following composition may be used: monomer composition used for forming the acrylic polymer (A), polymerization initiator for polymerizing the monomer composition, curable pressure-sensitive adhesive composition containing a mixture with the other component added as necessary. A light curable pressure-sensitive adhesive composition, which includes a photopolymerization initiator as an polymerization initiator may be preferred. The curable pressure-sensitive adhesive composition is a so-called solventless type pressure-sensitive adhesive composition prepared by mixing the polymerization initiator into the monomer composition.

The monomer composition is usually a mixture of monomer components such as (meth)acrylic acid alkyl ester (a1) and polar monomer (a2). The monomer composition is usually in a liquid state although the monomer composition may be in a different state depending on the kind or the composition ratio. To increase the viscosity of the monomer composition and workability (easiness in handling), a partial polymer may be formed by partially polymerizing monomer components in the monomer composition. The monomer composition including the partial polymer may be in a syrupy state. Unreacted monomer components are polymerized as appropriate after the curable pressure-sensitive adhesive composition is prepared.

For polymerization to form the partial polymer, a publicly known or commonly used polymerization method can be used. The monomer components in the monomer composition may be polymerized using various polymerization initiators (e.g., photopolymerization initiator) provided as examples in the description of the acrylic polymer (A). The polymerization rate of the partial polymer may be adjusted in a range from 5 to 15 mass%, preferably, from 7 to 10 mass%. The polymerization rate of the partial polymer may be adjusted by determining a correlation between the viscosity of the monomer composition and the polymerization rate of the partial polymer in advance and by adjusting the viscosity of the monomer composition based on the correlation. The partial polymer is included into the pressure-sensitive adhesive layer as a part of the acrylic polymer (A) at the end.

If polyfunctional monomers are used for forming the acrylic polymer (A) as monomer components, the polyfunctional monomers may be mixed into the monomer composition before the partial polymer is formed. Alternatively, the polyfunctional monomers may be mixed into the monomer composition after the partial polymer is formed. In terms of forming the cross-linking acrylic polymer and adequately increasing the cohesive property of the pressure-sensitive adhesive layer, it is preferable that the polyfunctional monomers are mixed into the monomer composition after the partial polymer is formed.

The prepared curable pressure-sensitive adhesive composition is applied to a base member such as a substrate and a release liner and layered. Then, a curing process is performed on the layered pressure-sensitive adhesive composition. A drying process may be performed before and/or after the curing process as necessary. If the pressure-sensitive adhesive composition includes a thermal polymerization initiator, polymerization starts by heating and the pressure-sensitive adhesive composition is cured. If the pressure-sensitive adhesive composition includes a photopolymerization initiator, polymerization starts by application of active energy rays such as ultraviolet rays and the pressure-sensitive adhesive composition is cured (photo-curing). The active energy rays may be applied from one side of the layered pressure-sensitive adhesive composition or from both sides thereof. When the pressure-sensitive adhesive composition is cured, the pressure-sensitive adhesive layer that can be used for the double-sided pressure-sensitive adhesive sheet of this embodiment is prepared.

For the curing (photo-curing) by the active energy rays, a publicly known or commonly used method for blocking oxygen may be used as necessary so that the polymerization is not disturbed by oxygen in the air. For example, an appropriate base member such as a release liner and a substrate may be attached to the top surface of the layered pressure-sensitive adhesive composition, or the photo-curing may be performed in a nitrogen atmosphere.

Application (or coating) of the pressure-sensitive adhesive composition can be performed by a publicly known or commonly used coating method. A known coater such as gravure roll coater, reverse roll coater, kiss roll coater, dip roll coater, bar coater, knife coater, spray coater, comma coater, and direct coater can be used.

The pressure-sensitive adhesive layer may be formed using a pressure-sensitive adhesive composition other than the curable pressure-sensitive adhesive composition described earlier as long as an intended effect can be achieved (e.g., solvent-type pressure-sensitive adhesive composition and emulsion-type pressure-sensitive adhesive composition).

Thickness of Pressure-sensitive adhesive layer

In terms of achievement of large push-out adhesive force and high impactproof reliability, the thickness of the pressure-sensitive adhesive layer is preferably from 90 $\mu$m to 1,500 $\mu$m, more preferably, from 90 $\mu$m to 800 $\mu$m, further more preferably, from 90 $\mu$m to 600 $\mu$m, still further more preferably, from 90 $\mu$m to 400 $\mu$m. The thickness of the pressure-sensitive adhesive layer is preferably from 90 $\mu$m to 1,500 $\mu$m in terms of the following capability of the pressure-sensitive adhesive layer to an adhesive surface. The thickness of the pressure-sensitive adhesive layer is preferably from 90 $\mu$m to 800 $\mu$m in terms of easiness in preparation of the double-sided pressure-sensitive adhesive sheet (including responsiveness). The thickness of the pressure-sensitive adhesive layer is preferably from 90 $\mu$m to 600 $\mu$m in terms of hard-to-deform characteristics of the pressure-sensitive adhesive layer.

Release Liner

Surfaces of the pressure-sensitive adhesive layer (pressure-sensitive adhesive surfaces) of the double-sided pressure-sensitive adhesive sheet may be protected by release liners until the pressure-sensitive adhesive sheet is used. The pressure-sensitive adhesive surfaces may be protected by separate release liners or a single liner that is wound around the double-sided pressure-sensitive adhesive sheet in a roll shape. The release liner is used as a protective member for protecting the pressure-sensitive adhesive surface and thus is removed when the double-sided pressure-sensitive adhesive sheet is attached to an object. If the double-sided pressure-sensitive adhesive sheet is a substrate-less double-sided pressure-sensitive adhesive sheet, the release liner functions as a base member. The release liner is not compulsory and may not be attached to the double-sided pressure-sensitive adhesive sheet.

Commonly used release papers can be used for the release liners, that is, the release liners are not limited to any particular ones. For example, the following base members may be used for the release liners: base members having releasable layers; low-adhesive base members formed with fluorinated polymers; and low-adhesive base members formed with non-polar polymers. Examples of the base members having releasable layers include base members subjected to surface treatments with release agents such as silicone, long-chain alkyl, fluorine, and molybdenum sulfide release agents. Examples of fluorinated polymers of the low-adhesive base members include polytetrafluoroethylene, polychlorotrifuruoroethylene, polyvinyl fluoride, polyvinylidene fluoride, tetrafluoroethylene hexafluoropropylene copolymers, and chlorofluoroethylene vinylidene fluoride copolymers. Examples of the non-polar polymers include olefin resins (e.g., polyethylene, polypropylene).

Examples of the base members subjected to surface treatments include: polyester films such as polyethylene terephthalate; olefin resin films such as polyethylene films and polypropylene films; polyvinyl chloride films; polyimide films; polyamide films such as nylon films; plastic films such as rayon films; and papers such as high-quality papers, Japanese papers, kraft papers, glassine papers, synthetic papers, and top coated papers. In terms of workability, polyester films or papers may be preferred, and the polyethylene terephthalate may be more preferred.

The release liners may be prepared by a publicly known or commonly used method. The thickness of the release liners is not limited to any specific thickness.

Substrate

If the double-sided pressure-sensitive adhesive sheet is a pressure-sensitive adhesive sheet with a substrate, a substrate other than a form substrate (non-form substrate that does not have hollow portions such as bubbles) may be used. A plastic film substrate may be used for such a substrate. The material of the plastic film substrate is not limited to any particular kind. Examples of the material include: polyester resin such as polyethylene terephthalate; acrylic resin such as polymethylmethacrylate; polycarbonate; triacetylcellulose; polysulfone; polyarylate; polyimide; polyvinyl chloride; polyvinyl acetate; polyethylene; polypropylene; ethylene propylene copolymer; and cyclic olefin polymer such as ARTON (cyclic olefin polymer, manufactured by JSR Corporation) and ZEONOR (cyclic olefin polymer, manufactured by ZEON CORPORATION). The plastic materials can be used alone or in a combination of two or more kinds. The substrate is a part that is to be attached to an object together with the pressure-sensitive adhesive layer when the double-sided pressure-sensitive adhesive sheet is attached (applied) to the object. The release liners that are removed from the double-sided pressure-sensitive adhesive sheet when the pressure-sensitive adhesive sheet is used are not included in the substrate.

Double-Sided Pressure-sensitive adhesive sheet

The double-sided pressure-sensitive adhesive sheet of this embodiment includes at least one layer of the pressure-sensitive adhesive layer described earlier. The double-sided pressure-sensitive adhesive sheet can be prepared by a publicly known or commonly used method. The total thickness of the double-sided pressure-sensitive adhesive sheet may be from 90 $\mu$m to 1,500 $\mu$m regardless of whether the double-sided pressure-sensitive adhesive sheet includes a substrate. The total thickness is more preferably from 90 $\mu$m to 800 $\mu$m, further more preferably, from 90 $\mu$m to 600 $\mu$m, still further more preferably, from 90 $\mu$m to 400 $\mu$m.

A shape of the double-sided pressure-sensitive adhesive sheet is determined based on an intended purpose thereof. Specific examples of a plan-view shape of the double-sided pressure-sensitive adhesive sheet include a tape shape, a band shape, a slip shape, a square U shape, a square U shape, an L shape, a frame shape, and a loop shape. A tape or band shaped double-sided pressure-sensitive adhesive sheet has a long length and a small width. A slip shaped double-sided pressure-sensitive adhesive sheet has a shorter length than the tape or band shaped double-sided pressure-sensitive adhesive sheet and has a small width. The slip shaped double-sided pressure-sensitive adhesive sheet has an I shape. A U shaped double-sided pressure-sensitive adhesive sheet includes three slip shaped double-sided pressure-sensitive adhesive sheets arranged such that two of those extend from respective ends of another one of those on the same long side of the other of the sheets (at an angle to the longitudinal direction of the other one of the sheets). Corners of such a double-sided pressure-sensitive adhesive sheet may be rounded. A square shaped double-sided pressure-sensitive adhesive sheet has a shape similar to the U shaped double-sided pressure-sensitive adhesive sheet but two of slip shaped double-sided pressure-sensitive adhesive sheets extend from respective ends of another double-sided pressure-sensitive adhesive sheet in a direction perpendicular to the longitudinal direction of the other sheet. An L shaped double-sided pressure-sensitive adhesive sheet includes two slip shaped double-sided pressure-sensitive adhesive sheets arranged perpendicular to each other. A frame shaped double-sided pressure-sensitive adhesive sheet includes narrow linear portions connected together without gaps therebetween. Corners of the frame shaped double-sided pressure-sensitive adhesive sheet may be rounded or squared. Well-known frame shapes are a square and a rectangular frame shapes including four narrow linear portions connected together without gaps.

If the double-sided pressure-sensitive adhesive sheet is used for a small-size electronic device such as a mobile phone, a configuration (or shape) of the double-sided pressure-sensitive adhesive sheet may be with a width from 0.5 mm to 20 mm, more preferably, from 0.8 mm to 20 mm.

If the double-sided pressure-sensitive adhesive sheet is used for a middle-size electronic device such as a tablet PC, the configuration (or shape) of the double-sided pressure-sensitive adhesive sheet may be with a width from 0.5 mm to 50 mm, more preferably, from 0.8 mm to 30 mm.

Push-Out Adhesive Force

The double-sided pressure-sensitive adhesive sheet has a push-out adhesive force equal to or larger than 25.0 N/cm$^2$, more preferably, 28.0 N/cm$^2$. The push-out adhesive force is defined, for example, as follows. A sample for determination of the push-out adhesive force is prepared by bonding a polycarbonate plate and an acrylic plate with a frame-shaped double-sided pressure-sensitive adhesive sheet having an overall width of 40 mm, a height of 60 mm, and a frame width of 1 mm under a specified pressure. The acrylic plate is pressed from an inner side to the outer side in the thickness direction thereof at 10 mm/min until the acrylic plate is separated from the polycarbonate plate. The maximum stress among stresses measured since the pressure is applied to the sample until the polycarbonate plate and the acrylic plate are separated is defined as a push-out adhesive force.

An external force may be applied to members that are fixed by the double-sided pressure-sensitive adhesive sheet. As a result, the members may be warped or deformed. Even such a case, if the double-sided pressure-sensitive adhesive sheet has equal to or higher than 25.0 N/cm$^2$ of the push-out adhesive force defined as above, the sheet can keep holding the members.

Impactproof reliability

The double-sided pressure-sensitive adhesive sheet of this embodiment has impactproof reliability under a normal temperature (23 °C). The impactproof reliability refers to a low probability that removal between two members bonded together with a double-sided pressure-sensitive adhesive sheet occurs when a device (e.g., a mobile phone) in which those members are installed is subjected to a drop impact. Because the double-sided pressure-sensitive adhesive sheet has the impactproof reliability, removal thereof from the members is less likely to occur when the device such as a mobile phone is dropped and an instantaneous large impact is applied to the device. Furthermore, the double-sided pressure-sensitive adhesive sheet (or the pressure-sensitive adhesive layer) is less likely to break in such a situation. Therefore, the members fixed with the double-sided pressure-sensitive adhesive sheet remain held.

Other characteristics

The double-sided pressure-sensitive adhesive sheet has workability in cutting or punching, easiness in working or handling, adhesiveness (to an object), durability, and weather resistance. The double-sided pressure-sensitive adhesive sheet having such characteristics can use in various applications.

Example Applications of Double-Sided Pressure-Sensitive Adhesive Sheet

The double-sided pressure-sensitive adhesive sheet can be used for fixing members and modules installed in portable electronic devices. Examples of the portable electronic devices include mobile phones, personal handyphone systems (PHSs), smartphones, tablets (tablet PCs), mobile computers (mobile PCs), personal digital assistants (PDAs), electronic organizers, portable broadcast receivers such as portable television sets and portable radios, portable game consoles, portable audio players, cameras such as digital cameras, and video cameras such as camcorders.

How the double-sided pressure-sensitive adhesive sheet is used is not limited to any specific illustrated embodiment. Examples include fixing a lens (especially a glass lens) to a chassis, fixing a display panel to a chassis, fixing an input device such as a sheet-type keyboard or a touch panel to a chassis, attachment of a protective panel of an information display to a chassis, attachment of chassis, attachment of a decorative sheet to a chassis, and fixing members and modules installed in a portable electronic device.

Examples of the lens include a transparent member that is capable of refracting light and a transparent member that is not capable of refracting light. A simple window panel that is not capable of refracting light is included in a technical aspect of lens in this specification.

The double-sided pressure-sensitive adhesive sheet may be used to fix optical members installed in a mobile phone. The double-sided pressure-sensitive adhesive sheet may be used to bind the optical members together or to fix the optical member(s) to a chassis.

The optical members refer to members having optical characteristics (e.g., polarization, photorefractive, light scattering, photoreflective, light transmissive, light absorbing, light diffraction, and optical rotation characteristics, and visibility). The optical members are not limited to any specific ones as long as the members have optical characteristics. Examples of the optical members include polarizing plates, wave plates, phase plates, optical compensation films, brightness enhancement films, light guide plates, reflection films, transparent conductive films (ITO films), design films, decorative films, surface protective plates, prisms, lenses, color filters, transparent substrates, and laminated member including the above examples. In the examples, configurations of "plates" and "films" include plates, films, and sheets. For example, the polarizing plates include polarizing films and polarizing sheets.

Materials of the optical members are not limited to any specific ones. Examples of the materials of the optical members include plastics such as acrylic resins, polycarbonate resins, and polyethylene terephthalate, glasses, and metals (including metal oxides). The double-sided pressure-sensitive adhesive sheet may be used preferably for plastic optical members (especially acrylic or polycarbonate optical members).

The double-sided pressure-sensitive adhesive sheet has a large push-out adhesive force and high impactproof reliability. Therefore, the double-sided pressure-sensitive adhesive sheet may be used not only for binding members and modules installed in portable electronic devices with small screens but also for binding those installed in portable electronic devices with screen sizes of 35 cm$^2$ or larger (e.g., from 35 cm$^2$ to 650 cm$^2$). The double-sided pressure-sensitive adhesive sheet may be especially preferably used for binding members and modules installed in portable electronic devices with screen sizes of 40 cm$^2$ or larger (e.g., from 40 cm$^2$ to 650 cm$^2$).

The double-sided pressure-sensitive adhesive sheet may be used for fixing members and modules installed in devices other than the portable electronic devices described above. Examples of such devices include display devices (image display devices) and input devices. Examples of the display devices include liquid crystal display devices, organic EL (electroluminescence) display devices, plasma display panels (PDPs), and electronic papers. Examples of the input devices include touch panels.

Specific examples will be described. The scopes of the invention are not limited to the following examples.

Example 1

Preparation of Syrup I

Liquid monomer mixture (monomer composition) was prepared as monomer components by mixing 90 parts by mass of 2-ethylhexyl acrylate (2EHA) and 10 parts by mass of acrylic acid (AA) together. Then, 0.05 part by mass of IRGACURE 651 (2,2-dimethoxy-1,2-diphenylethane-1-one, manufactured by BASF Japan Ltd.) and 0.05 part by mass of IRGACURE 184 (1-hydroxycyclohexyl phenyl ketone, manufactured by BASF Japan Ltd.) were mixed into the liquid monomer mixture as photopolymerization initiators. Ultraviolet rays were applied to the mixture until the viscosity thereof became about 15 Pa·s (measured by BH viscometer, No. 5 rotor, at 10rpm and 30°C). As a result, syrup I (2EHA/AA = 90/10) containing a partial polymer in which a part of the monomer components was partially polymerized (polymerization rate: about 10 mass%) was prepared.

Preparation of Pressure-sensitive adhesive composition

A mixture of the syrup was prepared by adding 0.07 part by mass of 1,6-hexanediol diacrylate (HDDA) and 9 parts by mass of hollow glass balloons (mean particle diameter of 45 μm, 0.25 g/cm$^3$ of specific gravity) to 100 parts by mass of syrup I. The hollow glass balloons were Sphericel® 25P45 (silicate glass balloons, manufactured by Potters-Ballotini Co., Ltd.). 0.5 part by mass of Irganox 1010 (manufactured by BASF Japan Ltd.) was added to the mixture as an antioxidant. The above components were sufficiently mixed and a pressure-sensitive adhesive composition 1 was prepared. An acrylic polymer (A) in the pressure-sensitive adhesive composition I included 10.0 mass% of building blocks derived from polar monomers (all monomer components for forming the acrylic polymer (A): 100 parts by mass, polar monomer components: 10 parts by mass).

Preparation of Double-Sided Pressure-Sensitive Adhesive Sheet

The pressure-sensitive adhesive composition 1 was applied to a releasable surface of a release liner and a coated layer was prepared. Another release liner was attached to a surface of the coated layer such that a pharmacologically processed surface of the release liner was in contact with the coated layer. A polyethylene terephthalate substrate having a releasable surface (MRF or MRN (manufactured by Mitsubishi Polyester Film) was used.

Ultraviolet rays were applied to both surfaces of the coated layer at illuminance intensity of 5 mW/cm$^2$ for 3 minutes to harden the coated layer and a pressure-sensitive adhesive layer (pressure-sensitive adhesive layer) having a thickness of 200 μm was prepared. Blacklight manufactured by TOSHIBA CORPORATION was used as a source of the ultraviolet rays. The illuminance intensity was adjusted using a UV checker (UVR-T1 manufactured by TOPCON CORPORATIO) at the maximum sensitivity of 350 nm.

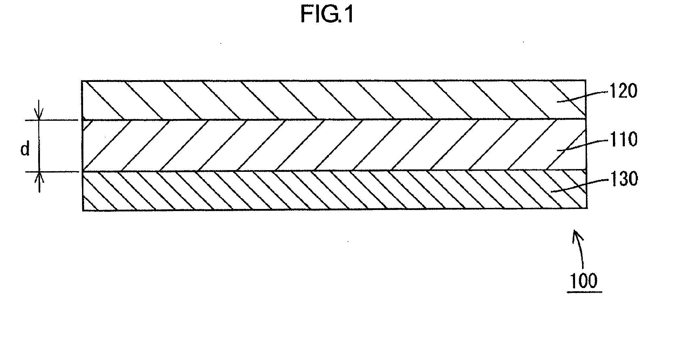

As described above, the double-sided pressure-sensitive adhesive sheet (substrate-less double-sided pressure-sensitive adhesive sheet having a laminate structure of release liner 120/pressure-sensitive adhesive layer 110/release liner 130) of example 1 was prepared. A schematic structure of the double-sided pressure-sensitive adhesive sheet 100 of example 1 is illustrated in FIG. 1. The thickness D of the pressure-sensitive adhesive layer 100 was 200 μm.

The solvent insoluble matter rate (mass%) of the pressure-sensitive adhesive layer 110 of the obtained double-sided pressure-sensitive adhesive layer 100 was 63 mass%. The solvent insoluble matter rate was measured by the following method.

Measurement of Solvent Insoluble Matter Rate

A specified amount of the pressure-sensitive adhesive layer (the first mass W1) was soaked into an ethyl acetate solution and left at room temperature for one week. Then, insoluble matters were taken out of the solution and dried. The mass (W2) of the dried insoluble matters was measured and the solvent insoluble matter rate was calculated by the following equation.

$$\text{Solvent insoluble matter rate} = (W2/W1) \times 100$$

Example 2

Preparation of Syrup II

Liquid monomer mixture (monomer composition) was prepared as monomer components by mixing 80 parts by mass of 2-ethylhexyl acrylate (2EHA), 11.5 parts by mass of 2-methoxyethyl acrylate (2MEA), 7 parts by mass of N-vinyl-2-pyrrolidone (NVP), and 1.5 parts by mass of N-(2-hydroxyethyl)acrylamide (HEAA) together. Then, 0.05 part by mass of IRGACURE 651 (2,2-dimethoxy-1,2-diphenylethane-1-one, manufactured by BASF Japan Ltd.) and 0.05 part by mass of IRGACURE 184 (1-hydroxycyclohexyl phenyl ketone, manufactured by BASF Japan Ltd.) were mixed into the liquid monomer mixture as photopolymerization initiators. Ultraviolet rays were applied to the mixture until the viscosity thereof became about 15 Pa·s (measured by BH viscometer, No. 5 rotor, at 10rpm and 30°C). As a result, syrup II (2EHA/2MEA/NVP/HEAA = 80/11.5/7/1.5) containing a partial polymer in which a part of the monomer components was partially polymerized (polymerization rate: about 10 mass%) was prepared.

Preparation of Pressure-Sensitive adhesive composition

A pressure-sensitive adhesive composition 2 was prepared by adding 3 parts by mass of acrylic acid (AA), 0.12 part by mass of 1,6-hexanediol diacrylate (HDDA), and 10 parts by mass of a first polymer (B) to 100 parts by mass of the syrup II, and by sufficiently mixing these components together. An acrylic polymer (A) in the pressure-sensitive adhesive composition 2 included 11.2 mass% of building blocks derived from polar monomers (all monomer components for forming the acrylic polymer (A): 103 parts by mass, polar monomer components: 11.5 parts by mass).

Preparation of Double-sided Pressure-Sensitive adhesive sheet

Preparation of double-sided pressure-sensitive adhesive sheet of example 2 was performed in the same manner as example 1 except for use of the pressure-sensitive adhesive composition 2, which was used instead of the pressure-sensitive adhesive composition 1. The double-sided pressure-sensitive adhesive sheet having a pressure-sensitive adhesive layer including the pressure-sensitive adhesive composition 2 with a thickness of 200 μm and a laminate structure similar to example 1 was prepared. A solvent insoluble matter rate of example 2 was 62 mass%.

A method of preparing the first polymer (B) is as follows.

Preparation of First Polymer (B)

100 parts by mass of toluene, 60 parts by mass of dicyclopentanyl methacrylate (DCPMA), 40 parts by mass of methyl methacrylate (MMA), and 3 parts by mass of thioglycolic acid (GSH acid) were poured into a four-necked flask. FA-513M manufactured by Hitachi Chemical Company, Ltd. was used for the dicyclopentanyl methacrylate (DCPMA). The thioglycolic acid (GSH acid) was used as a chain transfer agent. The mixture of the above was stirred for one hour at 70 °C in a nitrogen atmosphere. 0.2 part by mass of azobisisobutyronitrile was added to the mixture as a thermal polymerization initiator and the mixture was left at 70 °C for two hours while reactions were occurring. Then, the mixture was left at 80 °C for two hours while reactions were occurring. The reaction solution was placed in a 130 °C atmosphere to remove the toluene, the chain transfer agent, and unreacted monomers. A solid (meth)acrylic polymer (first polymer (B), DCPMA/MMA = 60/40) was prepared.

A weight-average molecular weight (Mw) of the prepared first polymer (B) was 5,500. A glass transition temperature (Tg) of the obtained first polymer (B) was 144°C.

Example 3

A pressure-sensitive adhesive composition 3 was prepared by adding 3 parts by mass of acrylic acid (AA), 0.12 part by mass of 1,6-hexanediol diacrylate (HDDA), and 15 parts by mass of the first polymer (B) to 100 parts by mass of the syrup II, and by sufficiently mixing these components together. An acrylic polymer (A) in the pressure-sensitive adhesive composition 3 included 11.2 mass% of building blocks derived from polar monomers (all monomer components for forming the acrylic polymer (A): 103 parts by mass, polar monomer components: 11.5 parts by mass).

Preparation of double-sided pressure-sensitive adhesive sheet of example 3 was performed in the same manner as example 1 except for use of the pressure-sensitive adhesive composition 3, which was used instead of the pressure-sensitive adhesive composition 1. The double-sided pressure-sensitive adhesive sheet having a pressure-sensitive adhesive layer including the pressure-sensitive adhesive composition 3 with a thickness of 145 μm and a laminate structure similar to example 1 was prepared. A solvent insoluble matter rate of example 3 was 55 mass%.

Example 4

A pressure-sensitive adhesive composition 4 was prepared in the same manner as example 2 except for addition of 80 parts by mass of ground calcium carbonate (natural ground calcium carbonate, mean particle diameter: 3.2 to 12 μm, specific gravity: 2.71 g/cm³, manufactured by Maruo Calcium Co.,Ltd.) to 100 parts by mass of the syrup II, instead of 10 parts by mass of the first polymer (B). An acrylic polymer (A) in the pressure-sensitive adhesive composition 4 included 11.2 mass% of building blocks derived from polar monomers (all monomer components for forming the acrylic polymer (A): 103 parts by mass, polar monomer components: 11.5 parts by mass).

Preparation of double-sided pressure-sensitive adhesive sheet of example 4 was performed in the same manner as example 1 except for use of the pressure-sensitive adhesive composition 4, which was used instead of the pressure-sensitive adhesive composition 1. The double-sided pressure-sensitive adhesive sheet having a pressure-sensitive adhesive layer including the pressure-sensitive adhesive composition 4 with a thickness of 156 μm and a laminate structure similar to example 1 was prepared. A solvent insoluble matter rate of example 4 was 94 mass%.

Example 5

A pressure-sensitive adhesive composition 5 was prepared by adding 3 parts by mass of acrylic acid (AA) and 0.025 part by mass of 1,6-hexanediol diacrylate (HDDA) to 100 parts by mass of the syrup II, and by sufficiently mixing these components together. An acrylic polymer (A) in the pressure-sensitive adhesive composition 5 included 11.2 mass% of building blocks derived from polar monomers (all monomer components for forming the acrylic polymer (A): 103 parts by mass, polar monomer components: 11.5 parts by mass).

Preparation of double-sided pressure-sensitive adhesive sheet of example 5 was performed in the same manner as example 1 except for use of the pressure-sensitive adhesive composition 5, which was used instead of the pressure-sensitive adhesive composition 1. The double-sided pressure-sensitive adhesive sheet having a pressure-sensitive adhesive layer including the pressure-sensitive adhesive composition 5 with a thickness of 140 μm and a laminate structure similar to example 1 was prepared. A solvent insoluble matter rate of example 5 was 60 mass%.

Example 6

A pressure-sensitive adhesive composition 6 was prepared by adding 3 parts by mass of acrylic acid (AA) and 0.12 part by mass of 1,6-hexanediol diacrylate (HDDA), and 15 parts by mass of a second polymer (B) to 100 parts by mass of the syrup II, and by sufficiently mixing these components together. An acrylic polymer (A) in the pressure-sensitive adhesive composition 6 included 11.2 mass% of building blocks derived from polar monomers (all monomer components for forming the acrylic polymer (A): 103 parts by mass, polar monomer components: 11.5 parts by mass).

Preparation of double-sided pressure-sensitive adhesive sheet of example 6 was performed in the same manner as example 1 except for use of the pressure-sensitive adhesive composition 6, which was used instead of the pressure-sensitive adhesive composition 1. The double-sided pressure-sensitive adhesive sheet having a pressure-sensitive adhesive layer including the pressure-sensitive adhesive composition 6 with a thickness of 145 μm and a laminate structure similar to example 1 was prepared. A solvent insoluble matter rate of example 6 was 77 mass%.

A method of preparing the second polymer (B) includes the following steps.

Preparation of Second Polymer (B)

Nitrogen gas was blown into a mixture of 60 parts by mass of cyclohexyl methacrylate (CHMA), 40 parts by mass of isobutyl methacrylate (IBMA), and 4 parts by mass of thioglycolic acid and dissolved oxygen was removed from the mixture. The mixture was heated to 90 °C and 0.05 part by mass of PERHEXYL O (t-hexylperoxy 2-ethylhexanoate) manufactured by NOF CORPORATION and 0.01 part by mass of PERHEXYL D (di-t-hexyl peroxide) manufactured by NOF CORPORATION were added to the mixture as polymerization initiators. The mixture was stirred at 90 °C for one and half hours and heated for one hour to 150 °C. The mixture was stirred again for one and half hours. Then, the mixture was heated for one hour to 170 °C and stirred at 170 °C for one hour.

The mixture was depressurized while maintained at 170 °C. The mixture was stirred for one hour and residual monomers were removed. The second polymer (B) (CHMA/IBMA = 60/40) was prepared. A weight-average molecular weight (Mw) of the prepared second polymer (B) was 3,500. A glass transition temperature (Tg) of the prepared second polymer (B) was 59 °C.

Example 7

A pressure-sensitive adhesive composition 7 was prepared in the same manner as example 2 except for addition of 5 parts by mass of the first polymer (B) to 100 parts by mass of the syrup II, instead of 10 parts by mass of the first polymer (B). An acrylic polymer (A) in the pressure-sensitive adhesive composition 7 included 11.2 mass% of building blocks derived from polar monomers (all monomer components for forming the acrylic polymer (A): 103 parts by mass, polar monomer components: 11.5 parts by mass).

Preparation of double-sided pressure-sensitive adhesive sheet of example 7 was performed in the same manner as example 1 except for use of the pressure-sensitive adhesive composition 7, which was used instead of the pressure-sensitive adhesive composition 1. The double-sided pressure-sensitive adhesive sheet having a pressure-sensitive adhesive layer including the pressure-sensitive adhesive composition 7 with a thickness of 148 μm and a laminate structure similar to example 1 was prepared. A solvent insoluble matter rate of example 7 was 79 mass%.

Example 8

A pressure-sensitive adhesive composition 8 was prepared in the same manner as example 5 except for addition of 4 parts by mass of acrylic acid (AA) to 100 parts by mass of the syrup II, instead of 3 parts by mass of the acrylic acid (AA). An acrylic polymer (A) in the pressure-sensitive adhesive composition 8 included 12.0 mass% of building blocks derived from polar monomers (all monomer components for forming the acrylic polymer (A): 104 parts by mass, polar monomer components: 12.5 parts by mass).

Preparation of double-sided pressure-sensitive adhesive sheet of example 8 was performed in the same manner as example 1 except for use of the pressure-sensitive adhesive composition 8, which was used instead of the pressure-sensitive adhesive composition 1. The double-sided pressure-sensitive adhesive sheet having a pressure-sensitive adhesive layer including the pressure-sensitive adhesive composition 8 with a thickness of 146 μm and a laminate structure similar to example 1 was prepared. A solvent insoluble matter rate of example 8 was 59 mass%.

Example 9

A pressure-sensitive adhesive composition 9 was prepared in the same manner as example 5 except for addition of 5 parts by mass of acrylic acid (AA) instead of 3 parts by mass of the acrylic acid (AA), and 0.05 part by mass of dipentaerythritol hexaacrylate (DPHA) instead of 0.12 part by mass of 1,6-hexanediol diacrylate (HDDA) to 100 parts by mass of the syrup II. An acrylic polymer (A) in the pressure-sensitive adhesive composition 9 included 12.9 mass% of building blocks derived from polar monomers (all monomer components for forming the acrylic polymer (A): 105 parts by mass, polar monomer components: 13.5 parts by mass).

Preparation of double-sided pressure-sensitive adhesive sheet of example 9 was performed in the same manner as example 1 except for use of the pressure-sensitive adhesive composition 9, which was used instead of the pressure-sensitive adhesive composition 1. The double-sided pressure-sensitive adhesive sheet having a pressure-sensitive adhesive layer including the pressure-sensitive adhesive composition 9 with a thickness of 204 μm and a laminate structure similar to example 1 was prepared. A solvent insoluble matter rate of example 9 was 66 mass%.

Example 10

A pressure-sensitive adhesive composition 10 was prepared in the same manner as example 5 except for addition of 5 parts by mass of acrylic acid (AA) to 100 parts by mass of the syrup II, instead of 3 parts by mass of the acrylic acid (AA). An acrylic polymer (A) in the pressure-sensitive adhesive composition 10 included 12.9 mass% of building blocks derived from polar monomers (all monomer components for forming the acrylic polymer (A): 105 parts by mass, polar monomer components: 13.5 parts by mass).

Preparation of double-sided pressure-sensitive adhesive sheet of example 10 was performed in the same manner as example 1 except for use of the pressure-sensitive adhesive composition 10, which was used instead of the pressure-sensitive adhesive composition 1. The double-sided pressure-sensitive adhesive sheet having a pressure-sensitive adhesive layer including the pressure-sensitive adhesive composition 10 with a thickness of 138 μm and a laminate structure similar to example 1 was prepared. A solvent insoluble matter rate of example 10 was 60 mass%.

Example 11

A pressure-sensitive adhesive composition 11 was prepared by adding 5 parts by mass of acrylic acid (AA), 0.05 part by mass of dipentaerythritol hexaacrylate (DPHA), and 40 parts by mass of HAKUENKA CC-R (synthetic precipitated calcium carbonate, mean particle diameter: 80 μm, specific gravity: 2.52g/cm$^3$, supplied by SHIRAISHI CALCIUM KAISHA, LTD.) to 100 parts by mass of the syrup II, and by sufficiently mixing these components together. An acrylic polymer (A) in the pressure-sensitive adhesive composition 11 included 12.9 mass% of building blocks derived from polar monomers (all monomer components for forming the acrylic polymer (A): 105 parts by mass, polar monomer components: 13.5 parts by mass).

Preparation of double-sided pressure-sensitive adhesive sheet of example 11 was performed in the same manner as example 1 except for use of the pressure-sensitive adhesive composition 11, which was used instead of the pressure-sensitive adhesive composition 1. The double-sided pressure-sensitive adhesive sheet having a pressure-sensitive adhesive layer including the pressure-sensitive adhesive composition 11 with a thickness of 217 μm and a laminate structure similar to example 1 was prepared. A solvent insoluble matter rate of example 11 was 76 mass%.

Example 12

A pressure-sensitive adhesive composition 12 was prepared by adding 4 parts by mass of N-vinyl-2-pyrrolidone (NVP) and 0.035 part by mass of 1,6-hexanediol diacrylate (HDDA) to 100 parts by mass of the syrup I, and by sufficiently mixing these components together. An acrylic polymer (A) in the pressure-sensitive adhesive composition 12 included 13.5 mass% of building blocks derived from polar monomers (all monomer components for forming the acrylic polymer (A): 104 parts by mass, polar monomer components: 14 parts by mass).

Preparation of double-sided pressure-sensitive adhesive sheet of example 12 was performed in the same manner as example 1 except for use of the pressure-sensitive adhesive composition 12, which was used instead of the pressure-sensitive adhesive composition 1. The double-sided pressure-sensitive adhesive sheet having a pressure-sensitive adhesive layer including the pressure-sensitive adhesive composition 12 with a thickness of 194 μm and a laminate structure similar to example 1 was prepared. A solvent insoluble matter rate of example 12 was 75 mass%.

Example 13

A pressure-sensitive adhesive composition 13 was prepared in the same manner as example 12 except for addition of 8 parts by mass of N-vinyl-2-pyrrolidone (NVP) to 100 parts by mass of the syrup I, instead of 4 parts by mass of N-vinyl-2-pyrrolidone (NVP). An acrylic polymer (A) in the pressure-sensitive adhesive composition 13 included 16.7 mass% of building blocks derived from polar monomers (all monomer components for forming the acrylic polymer (A): 108 parts by mass, polar monomer components: 18 parts by mass).

Preparation of double-sided pressure-sensitive adhesive sheet of example 13 was performed in the same manner as example 1 except for use of the pressure-sensitive adhesive composition 13, which was used instead of the pressure-sensitive adhesive composition 1. The double-sided pressure-sensitive adhesive sheet having a pressure-sensitive adhesive layer including the pressure-sensitive adhesive composition 13 with a thickness of 194 μm and a laminate structure similar to example 1 was prepared. A solvent insoluble matter rate of example 13 was 76 mass%.

Example 14

Preparation of Syrup III

Liquid monomer mixture (monomer composition) was prepared as monomer components by mixing 78 parts by mass of 2-ethylhexyl acrylate (2EHA), 18 parts by mass of N-vinyl-2-pyrrolidone (NVP), and 4 parts by mass of 2-Hydroxyethyl acrylate(HEA) together. Then, 0.05 part by mass of IRGACURE 651 (2,2-dimethoxy-1,2-diphenylethane-1-one, manufactured by BASF Japan Ltd.) and 0.05 part by mass of IRGACURE 184 (1-hydroxycyclohexyl phenyl ketone, manufactured by BASF Japan Ltd.) were mixed into the liquid monomer mixture as photopolymerization initiators. Ultraviolet rays are applied to the mixture until the viscosity thereof becomes about 15 Pa·s (measured by BH viscometer, No. 5 rotor, at 10rpm and 30°C). As a result, syrup III (2EHA/NVP/HEA = 78/18/4) containing a partial polymer in which a part of the monomer components was partially polymerized (polymerization rate: about 10 mass%) is obtained.

Preparation of Pressure-Sensitive adhesive composition

A pressure-sensitive adhesive composition 14 was prepared by adding 0.12 part by mass of 1,6-hexanediol diacrylate (HDDA) to 100 parts by mass of the syrup III. The above components were sufficiently mixed and the pressure-sensitive adhesive composition 14 was prepared. An acrylic polymer (A) in the pressure-sensitive adhesive composition 14 included 22.0 mass% of building blocks derived from polar monomers (all monomer components for forming the acrylic polymer (A): 100 parts by mass, polar monomer components: 22 parts by mass).

Preparation of double-sided pressure-sensitive adhesive sheet of example 14 was performed in the same manner as example 1 except for use of the pressure-sensitive adhesive composition 14, which was used instead of the pressure-sensitive adhesive composition 1. The double-sided pressure-sensitive adhesive sheet having a pressure-sensitive adhesive layer including the pressure-sensitive adhesive composition 14 with a thickness of 144 μm and a laminate structure similar to example 1 was prepared. A solvent insoluble matter rate of example 14 was 82 mass%.

Example 15

A pressure-sensitive adhesive composition 15 was prepared by adding 1 part by mass of acrylic acid (AA) and 0.025 part by mass of 1,6-hexanediol diacrylate (HDDA) to 100 parts by mass of the syrup III, and by sufficiently mixing these components together. An acrylic polymer (A) in the pressure-sensitive adhesive composition 15 included 22.8 mass% of building blocks derived from polar monomers (all monomer components for forming the acrylic polymer (A): 101 parts by mass, polar monomer components: 23 parts by mass).

Preparation of double-sided pressure-sensitive adhesive sheet of example 15 was performed in the same manner as example 1 except for use of the pressure-sensitive adhesive composition 15, which was used instead of the pressure-sensitive adhesive composition 1. The double-sided pressure-sensitive adhesive sheet having a pressure-sensitive adhesive layer including the pressure-sensitive adhesive composition 15 with a thickness of 149 μm and a laminate structure similar to example 1 was prepared. A solvent insoluble matter rate of example 15 was 80 mass%.

Example 16

A pressure-sensitive adhesive composition 16 was prepared in the same manner as example 15 except for addition of 2 parts by mass of acrylic acid (AA) to 100 parts by mass of the syrup III, instead of 1 part by mass of the acrylic acid (AA). An acrylic polymer (A) in the pressure-sensitive adhesive composition 16 included 23.5 mass% of building blocks derived from polar monomers (all monomer components for forming the acrylic polymer (A): 102 parts by mass, polar monomer components: 24 parts by mass).

Preparation of double-sided pressure-sensitive adhesive sheet of example 16 was performed in the same manner as example 1 except for use of the pressure-sensitive adhesive composition 16, which was used instead of the pressure-sensitive adhesive composition 1. The double-sided pressure-sensitive adhesive sheet having a pressure-sensitive adhesive layer including the pressure-sensitive adhesive composition 16 with a thickness of 143 $\mu$m and a laminate structure similar to example 1 was prepared. A solvent insoluble matter rate of example 16 was 83 mass%.

Example 17

A pressure-sensitive adhesive composition 17 was prepared in the same manner as example 15 except for addition of 3 parts by mass of acrylic acid (AA) to 100 parts by mass of the syrup 111, instead of 1 part by mass of the acrylic acid (AA). An acrylic polymer (A) in the pressure-sensitive adhesive composition 17 included 24.3 mass% of building blocks derived from polar monomers (all monomer components for forming the acrylic polymer (A): 103 parts by mass, polar monomer components: 25 parts by mass).

Preparation of double-sided pressure-sensitive adhesive sheet of example 17 was performed in the same manner as example 1 except for use of the pressure-sensitive adhesive composition 17, which was used instead of the pressure-sensitive adhesive composition 1. The double-sided pressure-sensitive adhesive sheet having a pressure-sensitive adhesive layer including the pressure-sensitive adhesive composition 17 with a thickness of 143 $\mu$m and a laminate structure similar to example 1 was prepared. A solvent insoluble matter rate of example 17 was 81 mass%.

Example 18

A pressure-sensitive adhesive composition 18 was prepared in the same manner as example 15 except for addition of 4 parts by mass of acrylic acid (AA) to 100 parts by mass of the syrup III, instead of 1 part by mass of the acrylic acid (AA). An acrylic polymer (A) in the pressure-sensitive adhesive composition 18 included 25.0 mass% of building blocks derived from polar monomers (all monomer components for forming the acrylic polymer (A): 105 parts by mass, polar monomer components: 26 parts by mass).

Preparation of double-sided pressure-sensitive adhesive sheet of example 18 was performed in the same manner as example 1 except for use of the pressure-sensitive adhesive composition 18, which was used instead of the pressure-sensitive adhesive composition 1. The double-sided pressure-sensitive adhesive sheet having a pressure-sensitive adhesive layer including the pressure-sensitive adhesive composition 18 with a thickness of 145 $\mu$m and a laminate structure similar to example 1 was prepared. A solvent insoluble matter rate of example 18 was 82 mass%.

Example 19

A syrup mixture was prepared by adding 4 parts by mass of acrylic acid (AA) and 0.025 part by mass of 1,6-hexanediol diacrylate (HDDA) to 100 parts of the syrup III. Then, 0. 5 part by mass of IRGACURE 651 (2,2-dimethoxy-1,2-diphenylethane-1-one, manufactured by BASF Japan Ltd.) was added to the syrup mixture as an additional photopolymerization initiator. Furthermore, 0.3 part by mass of AT-DN101 black (manufactured by Dainichiseika Color & Chemicals Mfg. Co., Ltd.) was added to the syrup mixture as a black pigment. These components were sufficiently mixed together and the pressure-sensitive adhesive composition 19 was prepared. An acrylic polymer (A) in the pressure-sensitive adhesive composition 19 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 19 was performed in the same manner as example 1 except for use of the pressure-sensitive adhesive composition 19, which was used instead of the pressure-sensitive adhesive composition 1. The double-sided pressure-sensitive adhesive sheet having a pressure-sensitive adhesive layer including the pressure-sensitive adhesive composition 19 with a thickness of 200 $\mu$m and a laminate structure similar to example 1 was prepared. A solvent insoluble matter rate of example 19 was 35 mass%.

The haze and the total luminous transmittance of the double-sided pressure-sensitive adhesive sheet of example 19 were measured. The measured haze was 44 % and the measured total light transmittance was 18 %. Methods used for the measurement of the haze and the total luminous transmittance conform to the Japanese Industrial Standards (JIS) K7361 (Plastics-Determination of the total luminous transmittance of transparent materials). Details of the methods are described below.

Methods of Measuring Haze and Total Luminous Transmittance

One of the release liners was removed from the double-sided pressure-sensitive adhesive sheet and the double-sided pressure-sensitive adhesive sheet is attached to a glass slide (S-1111 manufactured by Matsunami Glass Ind.,Ltd., total light transmittance: 91.8 %, haze: 0.4 %). The other release liner was removed and a specimen (pressure-sensitive adhesive sheet/glass slide structure) was prepared. Haze and total light transmittance were measured using hazemeter (HM-150 manufactured by MURAKAMI COLOR RESEARCH LABORATORY CO.,Ltd.).

Example 20

A pressure-sensitive adhesive composition 20 was prepared in the same manner as example 19 using the syrup III except for 0.8 part by mass of black pigment used instead of 0.3 part by mass of the black pigment and 0.3 part by mass of additional photopolymerization initiator (IRGACURE 651) used instead of 0.5 part by mass of the additional photopolymerization initiator (IRGACURE 651). An acrylic polymer (A) in the pressure-sensitive adhesive composition 20 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 20 was performed in the same manner as example 1 except for use of the pressure-sensitive adhesive composition 20, which was used instead of the pressure-sensitive adhesive composition 1. The double-sided pressure-sensitive adhesive sheet having a pressure-sensitive adhesive layer including the pressure-sensitive adhesive composition 20 with a thickness of 207 $\mu$m and a laminate structure similar to example 1 was prepared. A solvent insoluble matter rate of example 20 was 41 mass%. The haze and the total luminous transmittance of the double-sided pressure-sensitive adhesive sheet of example 20 were 66 % and 2.9 %, respectively.

Example 21

A pressure-sensitive adhesive composition 21 was prepared in the same manner as example 19 using the syrup III except for 1 part by mass of black pigment used instead of 0.3 part by mass of the black pigment, 0.03 part by mass of HDDA used instead of 0.025 part by mass of the HDDA, and 0.3 part by mass of additional photopolymerization initiator (IRGACURE 651) used instead of 0.5 part by mass of the additional photopolymerization initiator (IRGACURE 651). An acrylic polymer (A) in the pressure-sensitive adhesive composition 21 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 21 was performed in the same manner as example 1 except for use of the pressure-sensitive adhesive composition 21, which was used instead of the pressure-sensitive adhesive composition 1. The double-sided pressure-sensitive adhesive sheet having a pressure-sensitive adhesive layer including the pressure-sensitive adhesive composition 21 with a thickness of 207 $\mu$m and a laminate structure similar to example 1 was prepared. A solvent insoluble matter rate of example 21 was 14 mass%. The haze and the total luminous transmittance of the double-sided pressure-sensitive adhesive sheet of example 21 were 72 % and 1.8 %, respectively.

Example 22

A pressure-sensitive adhesive composition 21 was prepared in the same manner as example 19 using the syrup III except for 1 part by mass of black pigment used instead of 0.3 part by mass of the black pigment and 0.05 part by mass of HDDA used instead of 0.025 part by mass of the HDDA. An acrylic polymer (A) in the pressure-sensitive adhesive composition 22 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 22 was performed in the same manner as example 1 except for use of the pressure-sensitive adhesive composition 22, which was used instead of the pressure-sensitive adhesive composition 1. The double-sided pressure-sensitive adhesive sheet having a pressure-sensitive adhesive layer including the pressure-sensitive adhesive composition 22 with a thickness of 206 $\mu$m and a laminate structure similar to example 1 was prepared. A solvent insoluble matter rate of example 22 was 41 mass%. The haze and the total luminous transmittance of the double-sided pressure-sensitive adhesive sheet of example 22 were 71 % and 1.7 %, respectively.

Example 23

A pressure-sensitive adhesive composition 23 was prepared in the same manner as example 19 using the syrup III except for 1 part by mass of black pigment used instead of 0.3 part by mass of the black pigment, 0.07 part by mass of HDDA used instead of 0.025 part by mass of the HDDA, and 0.7 part by mass of additional photopolymerization initiator (IRGACURE 651) used instead of 0.5 part by mass of the additional photopolymerization initiator (IRGACURE 651). An acrylic polymer (A) in the pressure-sensitive adhesive composition 23 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 23 was performed in the same manner as example 1 except for use of the pressure-sensitive adhesive composition 23, which was used instead of the pressure-sensitive adhesive composition 1. The double-sided pressure-sensitive adhesive sheet having a pressure-sensitive adhesive layer including the pressure-sensitive adhesive composition 23 with a thickness of 209 $\mu$m and a laminate structure similar to example 1 was prepared. A solvent insoluble matter rate of example 23 was 55 mass%. The haze and the total luminous transmittance of the double-sided pressure-sensitive adhesive sheet of example 23 were 69 % and 1.3 %, respectively.

Example 24

A pressure-sensitive adhesive composition 24 was prepared in the same manner as example 19 using the syrup III except for 0.8 part by mass of black pigment used instead of 0.3 part by mass of the black pigment, 0.056 part by mass of HDDA used instead of 0.025 part by mass of the HDDA, 0.7 part by mass of additional photopolymerization initiator (IRGACURE 651) used instead of 0.5 part by mass of the additional photopolymerization initiator (IRGACURE 651), and 4 parts by mass of hollow glass balloons (mean particle diameter: 45$\mu$m, specific gravity: 0.25 g/cm$^3$, Spheri-cel®25P45 (silicate glass) manufactured by Potters-Ballotini Co., Ltd.) added thereto. An acrylic polymer (A) in the pressure-sensitive adhesive composition 24 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 24 was performed in the same manner as example 1 except for use of the pressure-sensitive adhesive composition 24, which is used instead of the pressure-sensitive adhesive composition 1. The double-sided pressure-sensitive adhesive sheet having a pressure-sensitive adhesive layer including the pressure-sensitive adhesive composition 24 with a thickness of 212 $\mu$m and a laminate structure similar to example 1 was prepared. A solvent insoluble matter rate of example 24 was 56 mass%. The haze and the total luminous transmittance of the double-sided pressure-sensitive adhesive sheet of example 24 were 80 % and 2.0 %, respectively.

Example 25

A pressure-sensitive adhesive composition 25 was prepared in the same manner as example 19 using the syrup III except for 0.8 part by mass of black pigment used instead of 0.3 part by mass of the black pigment, 0.03 part by mass of HDDA used instead of 0.025 part by mass of the HDDA, 0.7 part by mass of additional photopolymerization initiator (IRGACURE 651) used instead of 0.5 part by mass of the additional photopolymerization initiator (IRGACURE 651), and 10 parts by mass of aluminum hydroxide (mean particle diameter: 18$\mu$m, specific gravity: 0.9 g/cm$^3$, H31 (HIGILITE) manufactured by Showa Denko K.K.) added thereto. An acrylic polymer (A) in the pressure-sensitive adhesive composition 24 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 25 was performed in the same manner as example 1 except for use of the pressure-sensitive adhesive composition 25, which is used instead of the pressure-sensitive adhesive composition 1. The double-sided pressure-sensitive adhesive sheet having a pressure-sensitive adhesive layer including the pressure-sensitive adhesive composition 25 with a thickness of 205 $\mu$m and a laminate structure similar to example 1 was prepared. A solvent insoluble matter rate of example 25 was 23 mass%. The haze and the total luminous transmittance of the double-sided pressure-sensitive adhesive sheet of example 25 were 93 % and 2.8 %, respectively.

Example 26

A pressure-sensitive adhesive composition 26 was prepared in the same manner as example 19 using the syrup III except for 0.8 part by mass of black pigment used instead of 0.3 part by mass of the black pigment, 0.08 part by mass of HDDA used instead of 0.025 part by mass of the HDDA, 0.7 part by mass of additional photopolymerization initiator (IRGACURE 651) used instead of 0.5 part by mass of the additional photopolymerization initiator (IRGACURE 651), and 10 parts by mass of hydrogenated petroleum resin (softening point: 125 °C, Alcon P 125 manufactured by Arakawa Chemical Industries, Ltd.) added thereto. An acrylic polymer (A) in the pressure-sensitive adhesive composition 28 included 25.0 mass% of building blocks derived from polar monomers (all monomer components for forming the acrylic polymer (A): 104 parts by mass, polar monomer components: 26 parts by mass).

Preparation of double-sided pressure-sensitive adhesive sheet of example 26 was performed in the same manner as example 1 except for use of the pressure-sensitive adhesive composition 26, which was used instead of the pressure-sensitive adhesive composition 1. The double-sided pressure-sensitive adhesive sheet having a pressure-sensitive adhesive layer including the pressure-sensitive adhesive composition 26 with a thickness of 204 $\mu$m and a laminate structure similar to example 1 was prepared. A solvent insoluble matter rate of example 26 was 57 mass%. The haze and the total luminous transmittance of the double-sided pressure-sensitive adhesive sheet of example 26 were 85 % and 3.4 %, respectively.

Example 27

A pressure-sensitive adhesive composition 27 was prepared by adding 3 parts by mass of acrylic acid (AA), 5 parts by mass of 2-Hydroxyethyl acrylate (HEA) and 0.025 part by mass of HDDA to 100 parts by mass of the syrup III, and by sufficiently mixing these components together. An acrylic polymer (A) in the pressure-sensitive adhesive composition 27 included 27.8 mass% of building blocks derived from polar monomers (all monomer components for forming the acrylic polymer (A): 108 parts by mass, polar monomer components: 26 parts by mass).

Preparation of double-sided pressure-sensitive adhesive sheet of example 27 was performed in the same manner as example 1 except for use of the pressure-sensitive adhesive composition 27, which was used instead of the pressure-sensitive adhesive composition 1. The double-sided pressure-sensitive adhesive sheet having a pressure-sensitive adhesive layer including the pressure-sensitive adhesive composition 27 with a thickness of 200 $\mu$m and a laminate

structure similar to example 1 was prepared. A solvent insoluble matter rate of example 27 was 68 mass%.

Example 28

A syrup mixture was prepared by adding 17 parts by mass of N-vinyl-2-pyrrolidone (NVP), 4 parts by mass of 2-Hydroxyethyl acrylate (HEA), 39 parts by mass of 2-ethylhexyl acrylate (2EHA), and 0.07 part by mass of 1,6-hexanediol diacrylate (HDDA) to 40 parts by mass of the syrup I. Then, 0.7 part by mass of IRGACURE 651 (2,2-dimethoxy-1,2-diphenylethane-1-one, manufactured by BASF Japan Ltd.) was added to the syrup mixture as an additional photopolymerization initiator. Furthermore, 1 part by mass of AT-DN101 black (manufactured by Dainichiseika Color & Chemicals Mfg. Co., Ltd.) was added to the syrup mixture as a black pigment. These components were sufficiently mixed together and the pressure-sensitive adhesive composition 28 was prepared.

An acrylic polymer (A) in the pressure-sensitive adhesive composition 28 included 21.0 mass% of building blocks derived from polar monomers (all monomer components for forming the acrylic polymer (A): 100 parts by mass, polar monomer components: 25 parts by mass).

Preparation of double-sided pressure-sensitive adhesive sheet of example 28 was performed in the same manner as example 1 except for use of the pressure-sensitive adhesive composition 28, which was used instead of the pressure-sensitive adhesive composition 1. The double-sided pressure-sensitive adhesive sheet having a pressure-sensitive adhesive layer including the pressure-sensitive adhesive composition 28 with a thickness of 200 μm and a laminate structure similar to example 1 was prepared. A solvent insoluble matter rate of example 28 was 61 mass%.

Example 29

Preparation of Syrup IV

Liquid monomer mixture (monomer composition) was prepared as monomer components by mixing 94 parts by mass of 2-ethylhexyl acrylate (2EHA) and 6 parts by mass of acrylic acid (AA) together. Then, 0.05 part by mass of IRGACURE 651 (2,2-dimethoxy-1,2-diphenylethane-1-one, manufactured by BASF Japan Ltd.) and 0.05 part by mass of IRGACURE 184 (1-hydroxycyclohexyl phenyl ketone, manufactured by BASF Japan Ltd.) were mixed into the liquid monomer mixture as photopolymerization initiators. Ultraviolet rays were applied to the mixture until the viscosity thereof becomes about 15 Pa·s (measured by BH viscometer, No. 5 rotor, at 10rpm and 30°C). As a result, syrup IV (2EHA/AA = 94/6) containing a partial polymer in which a part of the monomer components is partially polymerized (polymerization rate: about 10 mass%) was prepared.

Preparation of Pressure-Sensitive Adhesive Composition

A syrup mixture was prepared by adding 17 parts by mass of N-vinyl-2-pyrrolidone (NVP), 4 parts by mass of 2-Hydroxyethyl acrylate (HEA), 12.3 parts by mass of 2-ethylhexyl acrylate (2EHA), and 0.07 part by mass of 1,6-hexanediol diacrylate (HDDA) to 66.7 parts by mass of the syrup IV. Then, 0.7 part by mass of IRGACURE 651 (2,2-dimethoxy-1,2-diphenylethane-1-one, manufactured by BASF Japan Ltd.) was added to the syrup mixture as an additional photopolymerization initiator. Furthermore, 1 part by mass of AT-DN101 black (manufactured by Dainichiseika Color & Chemicals Mfg. Co., Ltd.) was added to the syrup mixture as a black pigment. These components were sufficiently mixed together and the pressure-sensitive adhesive composition 29 is prepared.

An acrylic polymer (A) in the pressure-sensitive adhesive composition 29 included 21.0 mass% of building blocks derived from polar monomers (all monomer components for forming the acrylic polymer (A): 100 parts by mass, polar monomer components: 25 parts by mass).

Preparation of double-sided pressure-sensitive adhesive sheet of example 29 was performed in the same manner as example 1 except for use of the pressure-sensitive adhesive composition 29, which was used instead of the pressure-sensitive adhesive composition 1. The double-sided pressure-sensitive adhesive sheet having a pressure-sensitive adhesive layer including the pressure-sensitive adhesive composition 29 with a thickness of 200 μm and a laminate structure similar to example 1 was prepared. A solvent insoluble matter rate of example 29 was 59 mass%.

Example 30

A pressure-sensitive adhesive composition 30 containing a thermal foaming agent 1 was prepared by adding 30 parts by mass of the thermal foaming agent 1 (thermally-expandable microspheres, Expancel® 051 DU40 manufactured by Expancel) and 0.2 part by mass of trimethylol propane triacrylate (TMPTA) to 100 parts by mass of the syrup I, and sufficiently mixing these components together. An acrylic polymer (A) in the pressure-sensitive adhesive composition 30 included 10.0 mass% of building blocks derived from polar monomers (all monomer components for forming the acrylic polymer (A): 100 parts by mass, polar monomer components: 10.0 parts by mass).

Preparation of thermally-expandable double-sided pressure-sensitive adhesive sheet of example 30 was performed in the same manner as example 1 except for use of the pressure-sensitive adhesive composition 30, which was used instead of the pressure-sensitive adhesive composition 1. The thermally-expandable double-sided pressure-sensitive adhesive sheet having a pressure-sensitive adhesive layer including the pressure-sensitive adhesive composition 30 with a thickness of 200 μm and a laminate structure similar to example 1 was prepared. A solvent insoluble matter rate of example 30 was 89 mass%.

Example 31

A thermally-expandable double-sided pressure-sensitive adhesive sheet of example 31 having a similar laminate structure to that of example 30 was prepared in the same manner as example 30 except for a thickness of a pressure-sensitive adhesive layer thereof including the pressure-sensitive adhesive composition 30 was set to 150 μm. A solvent insoluble matter rate of example 31 was 89 mass%.

Example 32

A pressure-sensitive adhesive composition 32 containing a thermal foaming agent 2 was prepared by adding 30 parts by mass of the thermal foaming agent 2 (thermally-expandable microspheres, Matsumoto Microsphere® F-48D* manufactured by Matsumoto Yushi-Seiyaku Co., Ltd.) and 0.2 part by mass of trimethylol propane triacrylate (TMPTA) to 100 parts by mass of the syrup I, and sufficiently mixing these components together. An acrylic polymer (A) in the pressure-sensitive adhesive composition 32 included 10.0 mass% of building blocks derived from polar monomers (all monomer components for forming the acrylic polymer (A): 100 parts by mass, polar monomer components: 10.0 parts by mass).

Preparation of thermally-expandable double-sided pressure-sensitive adhesive sheet of example 32 was performed in the same manner as example 1 except for use of the pressure-sensitive adhesive composition 32, which was used instead of the pressure-sensitive adhesive composition 1. The thermally-expandable double-sided pressure-sensitive adhesive sheet having a pressure-sensitive adhesive layer including the pressure-sensitive adhesive composition 32 with a thickness of 200 μm and a laminate structure similar to example 1 was prepared. A solvent insoluble matter rate of example 32 was 86 mass%.

Example 33

A pressure-sensitive adhesive composition 33 containing a thermal foaming agent 2 was prepared by adding 20 parts by mass of the thermal foaming agent 2 (thermally-expandable microspheres, Matsumoto Microsphere® F-48D* manufactured by Matsumoto Yushi-Seiyaku Co., Ltd.) and 0.2 part by mass of trimethylol propane triacrylate (TMPTA) to 100 parts by mass of the syrup I, and sufficiently mixing these components together. An acrylic polymer (A) in the pressure-sensitive adhesive composition 33 included 10.0 mass% of building blocks derived from polar monomers (all monomer components for forming the acrylic polymer (A): 100 parts by mass, polar monomer components: 10.0 parts by mass).

A thermally-expandable double-sided pressure-sensitive adhesive sheet of example 33 having a similar laminate structure to that of example 32 was prepared in the same manner as example 32 except for a thickness of a pressure-sensitive adhesive layer thereof including the pressure-sensitive adhesive composition 33 was set to 94 μm. A solvent insoluble matter rate of example 33 was 86 mass%.

Furthermore, a release liner was removed from one of surfaces of the prepared double-sided pressure-sensitive adhesive sheet (pressure-sensitive adhesive layer), and the double-sided pressure-sensitive adhesive sheet (pressure-sensitive adhesive layer) was attached to a surface of a polyester film (Lumirror® S10 manufactured by Toray Industries, Inc., thickness: 12 μm) with a hand roller. Another double-sided pressure-sensitive adhesive sheet was attached to the other surface of the polyester film, and thermally-expandable double-sided pressure-sensitive adhesive sheet with a PET substrate of example 33 was prepared.

Comparative Example 1

A pressure-sensitive adhesive composition C 1 was prepared by adding 0.05 part by mass of DPHA to 100 parts by mass of the syrup II, and sufficiently mixing these components together. An acrylic polymer (A) in the pressure-sensitive adhesive composition C1 included 8.5 mass% of building blocks derived from polar monomers (all monomer components for forming the acrylic polymer (A): 100 parts by mass, polar monomer components: 8.5 parts by mass).

Preparation of double-sided pressure-sensitive adhesive sheet of comparative example 1 was performed in the same manner as example 1 except for use of the pressure-sensitive adhesive composition C1, which was used instead of the pressure-sensitive adhesive composition 1. The double-sided pressure-sensitive adhesive sheet having a pressure-sensitive adhesive layer including the pressure-sensitive adhesive composition C 1 with a thickness of 200 μm and a laminate structure similar to example 1 was prepared. A solvent insoluble matter rate of comparative example 1 was 69 mass%.

Comparative Example 2

A pressure-sensitive adhesive composition C2 was prepared by adding 0.025 part by mass of DPHA and 40 parts by mass of ground calcium carbonate (manufactured by Maruo Calcium Co.,Ltd., natural ground calcium carbonate, mean particle diameter: 3.2 to 12 μm, specific gravity: 2.71 g/cm$^3$) to 100 parts by mass of the syrup II, and sufficiently mixing these components together. An acrylic polymer (A) in the pressure-sensitive adhesive composition C2 included 8.5 mass% of building blocks derived from polar monomers (all monomer components for forming the acrylic polymer (A): 100 parts by mass, polar monomer components: 8.5 parts by mass).

Preparation of double-sided pressure-sensitive adhesive sheet of comparative example 2 was performed in the same manner as example 1 except for use of the pressure-sensitive adhesive composition C2, which was used instead of the pressure-sensitive adhesive composition 1. The double-sided pressure-sensitive adhesive sheet having a pressure-sensitive adhesive layer including the pressure-sensitive adhesive composition C2 with a thickness of 217μm and a laminate structure similar to example 1 was prepared. A solvent insoluble matter rate of comparative example 2 was 57 mass%.

Comparative Example 3

A pressure-sensitive adhesive composition C3 was prepared by adding 0.05 part by mass of DPHA and 20 parts by mass of hollow glass balloons (mean particle diameter: 45µm, specific gravity: 0.25 g/cm$^3$, Sphericel®25P45 (silicate glass) manufactured by Potters-Ballotini Co., Ltd.) to 100 parts by mass of the syrup II, and sufficiently mixing these components together. An acrylic polymer (A) in the pressure-sensitive adhesive composition C3 included 8.5 mass% of building blocks derived from polar monomers (all monomer components for forming the acrylic polymer (A): 100 parts by mass, polar monomer components: 8.5 parts by mass).

Preparation of double-sided pressure-sensitive adhesive sheet of comparative example 3 was performed in the same manner as example 1 except for use of the pressure-sensitive adhesive composition C3, which was used instead of the pressure-sensitive adhesive composition 1. The double-sided pressure-sensitive adhesive sheet having a pressure-sensitive adhesive layer including the pressure-sensitive adhesive composition C3 with a thickness of 210 µm and a laminate structure similar to example 1 was prepared. A solvent insoluble matter rate of comparative example 3 was 68 mass%.

Comparative Example 4

A pressure-sensitive adhesive composition C4 was prepared by adding 0.025 part by mass of HDDA and 16.5 parts by mass of 2-Hydroxyethyl acrylate (HEA) to 100 parts by mass of the syrup II, and sufficiently mixing these components together. An acrylic polymer (A) in the pressure-sensitive adhesive composition C4 includes 30.4 mass% of building blocks derived from polar monomers (all monomer components for forming the acrylic polymer (A): 131.5 parts by mass, polar monomer components: 40 parts by mass).

Preparation of double-sided pressure-sensitive adhesive sheet of comparative example 4 was performed in the same manner as example 1 except for use of the pressure-sensitive adhesive composition C4, which was used instead of the pressure-sensitive adhesive composition 1. The double-sided pressure-sensitive adhesive sheet having a pressure-sensitive adhesive layer including the pressure-sensitive adhesive composition C4 with a thickness of 200 µm and a laminate structure similar to example 1 was prepared. A solvent insoluble matter rate of comparative example 4 was 78 mass%.

Evaluation Test

Evaluation tests were conducted for examples 1 to 29 and comparative examples 1 to 4 to evaluate push-out adhesive force and impactproof reliability (under normothermic conditions) of each double-sided pressure-sensitive adhesive sheet.

For examples 30 to 33, evaluation tests were conducted to evaluate adhesion (adhesive property) and easiness in removal/tear-off (detachability) in addition to evaluation tests to evaluate push-out adhesive force and impactproof reliability (under normothermic conditions). In the adhesion and detachability evaluation tests, 180-degree peel adhesion was measured in an initial state (before heating) and in a heated state.

Evaluation 1: Push-Out Adhesive Force

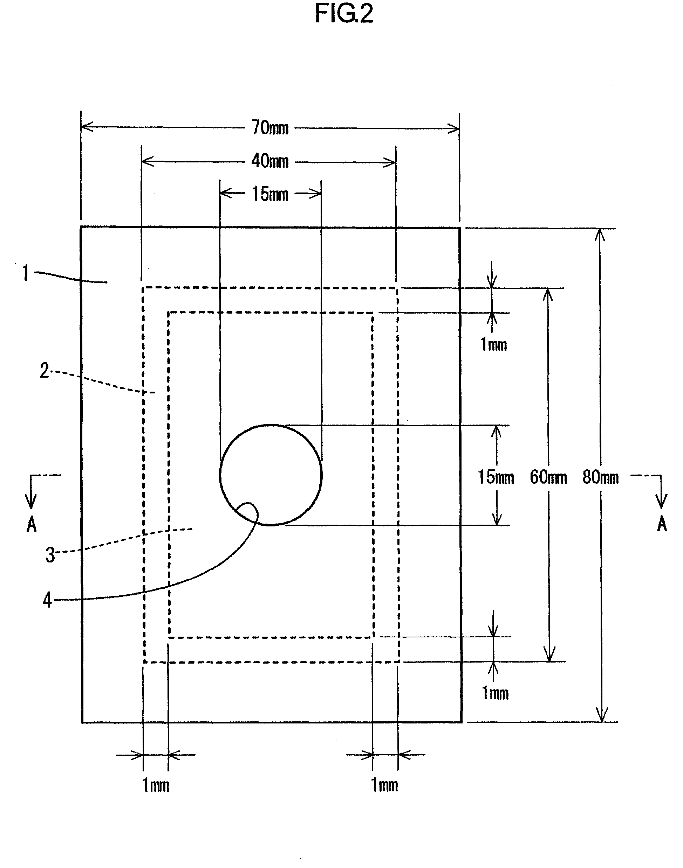

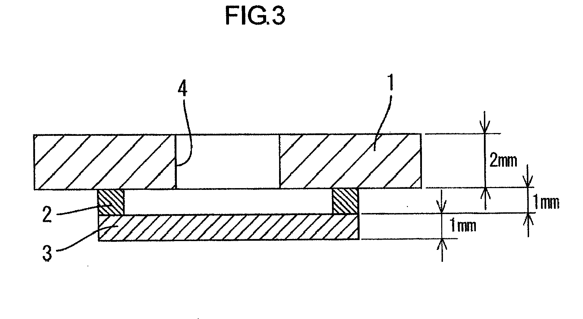

A schematic view (top view) of a sample used for measuring a push-out adhesive force is illustrated in FIG. 2. A prepared double-sided pressure-sensitive adhesive sheet was cut into a window-frame-like shape (a frame-like shape) with a width of 1 mm in a size of 40-mm wide by 60-mm height as illustrated in FIG. 2. A window-frame shaped double-sided pressure-sensitive adhesive sheet was prepared. An acrylic plate (acrylic lens, width: 40mm, height: 60 mm, thickness: 1 mm) and polycarbonate plate (PC plate, width: 70 mm, height: 80 mm, thickness: 2 mm) were bonded together with a window-frame shaped double-sided pressure-sensitive adhesive sheet. The acrylic plate had a through hole having a diameter of 15mm at the center. The acrylic plate and the PC plate were pressure-bonded in a condition that a roller moves back and forth for one time while applying a predetermined pressing force (2 kg). The sample for evaluation was prepared. A cross-sectional view of the sample cut along line A-A in FIG. 2 is illustrated in FIG. 3. In FIGS. 2 and 3, reference numerals 1, 2, 3, and 4 denote the PC plate, the window-frame shaped double-sided pressure-sensitive adhesive sheet, the acrylic plate, and the through hole of the PC plate, respectively.

The sample was set in a universal tensile and compression testing machine (tensile and compression testing machine TG-1kN manufactured by Minebea Co., Ltd). The round rod 21 was passed through the through hole 4 of the PC plate 1 and the acrylic plate 3 was pressed by the round rod 21 in a condition of 10 mm/min. The maximum stress among stresses measured since the pressure was applied to the sample until the PC plate 1 and the acrylic plate 3 were separated was defined as a push-out adhesive force. The measurement was performed at normal temperature (23 °C).

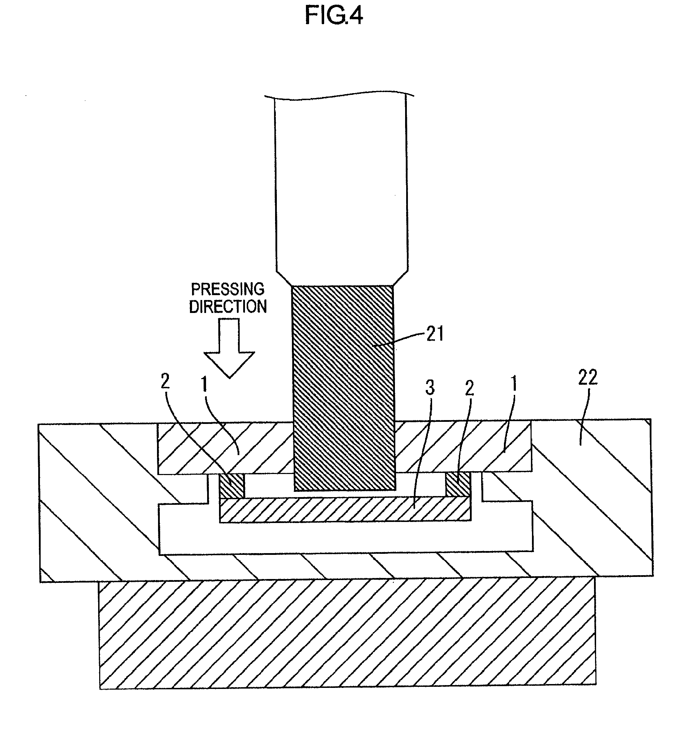

A method of measuring push-out adhesive forces is schematically illustrated in FIG. 4. In FIG. 4, reference numerals 1, 2, 3, 21, and 22 denote the PC plate, the window-frame shaped double-sided pressure-sensitive adhesive sheet, the acrylic plate, a round rod, and a stage, respectively. The sample was fixed to the stage 22 of a tensile and compression testing machine and the acrylic plate 3 of the sample was pressed by the round rod 21 that was passed through the through hole 4 of the PC plate 1. The PC board 1 of the sample was not warped or broken when the acrylic plate 3 was pressed and a load was applied.

Evaluation 2: Impactproof Reliability Under Normal Temperature

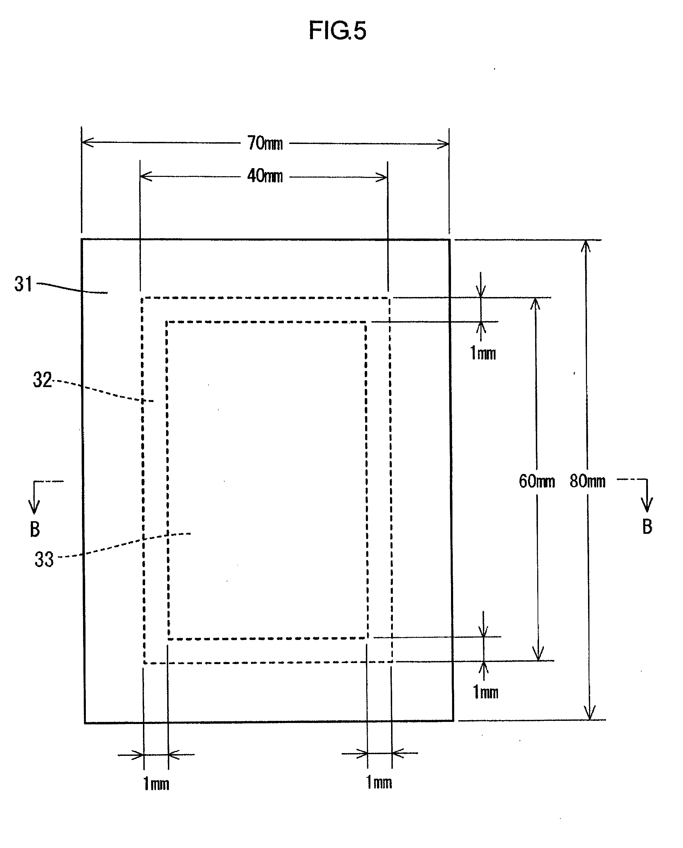

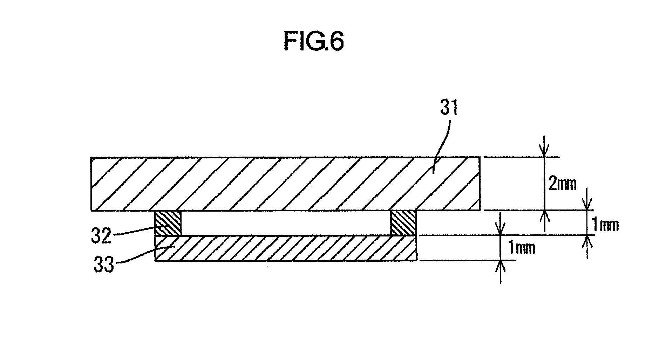

A schematic view (top view) of a sample used for an evaluation of impactproof reliability is illustrated in FIG. 5. A prepared double-sided pressure-sensitive adhesive sheet was cut into a window-frame-like shape (a frame-like shape) with a width of 1 mm in a size of 40-mm wide by 60-mm height as illustrated in FIG. 5. A window-frame shaped double-sided pressure-sensitive adhesive sheet was prepared. An acrylic plate (acrylic lens, width: 40mm, height: 60 mm, thickness: 1 mm) and polycarbonate plate (PC plate, width: 70 mm, height: 80 mm, thickness: 2 mm) were bonded together with a window-frame shaped double-sided pressure-sensitive adhesive sheet. The acrylic plate and the PC plate were pressure-bonded in a condition that a roller moves back and forth for one time while applying a predetermined pressing force (2 kg). The sample for evaluation was prepared. A cross-sectional view of the sample cut along line B-B in FIG. 5 is illustrated in FIG. 6. In FIGS. 5 and 6, reference numerals 31, 32, and 33 denote the PC plate, the window-frame shaped double-sided pressure-sensitive adhesive sheet, and the acrylic plate (acrylic lens), respectively.

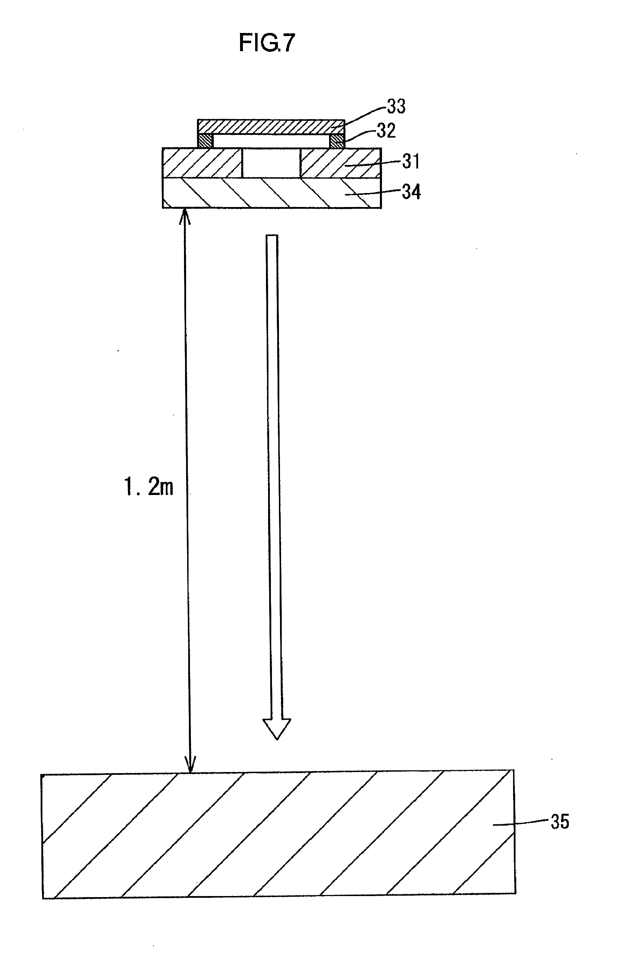

A method of measuring impactproof reliability is schematically illustrated in FIG. 7. A weight 34 was attached to the prepared sample and thus a total weight of the sample was 110 g. The sample was dropped to free fall from 1.2 m above a concrete board 35 (see FIG. 7) and the impactproof reliability of the sample was evaluated. The evaluation was made based on a condition of the sample after dropped 12 times to free fall at normal temperature (23 °C).

The sample was dropped 6 times as follow. The sample was dropped with a plate surface of the polycarbonate plate 31 on the weight 34 side facing down at the first time. The sample was dropped with a plate surface of the polycarbonate plate 31 on the acrylic plate 33 side facing down at the second time. The sample was dropped with one of short side surfaces of the polycarbonate plate 31 facing down at the third time. The sample was dropped with the other short side surface of the polycarbonate plate 31 facing down at the fourth time. The sample was dropped with one of long side surfaces of the polycarbonate plate 31 facing down at the fifth time. The sample was dropped with the other long side surface of the polycarbonate plate 31 facing down at the sixth time. The above series was performed two times and evaluations of the impactproof reliability were made after two series of dropping were performed.

Evaluation Standards

Good: Lifting of the acrylic plate was not observed and the acrylic plate remained attached after the sample was dropped to free fall 12 times at normal temperature.

Bad: Lifting of the acrylic plate was observed. The number corresponds to the number of times the sample was dropped and when the acrylic plate was lifted.

Evaluation 3: 180-Degree Peel Adhesion

A polyester film (Lumirror® S10 manufactured by Toray Industries, Inc., thickness: 50 $\mu$m) was attached to one of surfaces of a thermally-expandable double-sided pressure-sensitive adhesive sheet of any one of examples 30 to 33 as a liner. The double-sided pressure-sensitive adhesive sheet with the liner was cut in a width of 20 mm. Then, the release liner attached to the double-sided pressure-sensitive adhesive sheet was removed and the double-sided pressure-sensitive adhesive sheet was pressure-bonded to a polycarbonate (PC) plate for adhesion evaluation in a condition that a roller moves back and forth for one time while applying a predetermined pressing force of 2 kg. The sample for adhesion evaluation was prepared. Another sample was prepared. The samples were prepared using the double-sided adhesive tapes of examples 30 to 33 for measuring initial adhesion (explained later) and for measuring adhesion after heating (explained later), respectively.

Initial Adhesion (Adhesion Before Heating)

The sample prepared as described above was left for 30 minutes after pressure-bonded. The sample was then placed under a 23 °C atmosphere. Then, the double-sided pressure-sensitive adhesive sheet of the sample was peeled at a peeling angle of 180 degrees at a peeling speed of 300 mm/minute using a tensile testing machine (TG-1kN manufactured by Minebea Co., Ltd., and the adhesion was measured. The measured adhesion was defined as an initial adhesion (20/mm). Samples of all examples 30 33 are prepared and adhesion (or adhesive properties) thereof was evaluated based on the initial adhesion according to the following evaluation standards.

Evaluation Standards

A: Sufficient adhesive property to an object (PC plate) to which the double-sided pressure-sensitive adhesive sheet was attached was observed (5.0 N/20 mm or higher)

B: Lower adhesive property to the object (PC plate) to which the double-sided pressure-sensitive adhesive sheet was attached was observed (2.5 N/20 mm or higher but lower than 5.0 N/20 mm).

C: Insufficient adhesive property to an object (PC plate) to which the double-sided pressure-sensitive adhesive sheet was attached was observed (lower than 2.5 N/20 mm).

The sample prepared as described above was left for 30 minutes after pressure-bonded. Then, the sample was heated by placing the sample in a hot-air dryer at a specified temperature (see table 4) for ten minutes. After heating, the sample was left under a 23-°C atmosphere for two hours, and then the peel adhesion of the sample double-sided pressure-sensitive adhesive sheet was measured in the same manner as the measurement of the initial adhesion. The measured peel adhesion is defined as an after-heating adhesion (20/mm). Samples of examples 30 to 33 were prepared and adhesion (adhesive properties) was evaluated based on the following evaluation standards.

A: The double-sided pressure-sensitive adhesive sheet was removed from an object (PC plate) with a small force (lower than 5.0 N/20 mm).

B: The double-sided pressure-sensitive adhesive sheet was easily removed from an object (PC plate) with a hand (0.5 N/20 mm or higher but lower than 2.0 N/20 mm).

C: The double-sided pressure-sensitive adhesive sheet was not removed or easily removed from an object (2.0 N/20 mm or higher).

The results of the evaluation tests are shown in tables 1 to 4. In the tables, components of the pressure-sensitive adhesive compositions used in examples 1 to 29, examples 30 to 33, and comparative examples 1 to 4 are also present. In the tables, the term "parts" means parts by mass and the symbol "-" means not present (zero). Abbreviations or terms in the tables represent the followings.

AA: Acrylic acid

NVP: N-vinyl-2-pyrrolidone

HEA: 2-Hydroxyethyl acrylate

HDDA: 1,6-hexanediol diacrylate

DPHA: Dipentaerythritol hexaacrylate

TMPTA: Trimethylol propane triacrylate

GB: Hollow glass balloon (product name: Sphericel® 25P45)

GROUND CALCIUM CARBONATE: natural ground calcium carbonate (product name: ground calcium carbonate)

PRECIPITATED CALCIUM CARBONATE: synthetic light calcium carbonate (product name: HAKUENKA CC-R)

BLACK PIGMENT: AT DN101 black (product name)

HYDROGENATED RESIN: hydrogenated petroleum resin (product name: Alcon P125)

H31: aluminum hydroxide (product name: H31 HIGILITE)

THERMAL FOAMING AGENT 1: thermally-expandable microsphere (product name: thermally-expandable microsphere 051DU40)

THERMAL FOAMING AGENT 2: thermally-expandable microsphere (product name: Matsumoto Microsphere® F-48D*)

Table 1

| EXAMPLE | SYRUP (100 PARTS) | ADDITIONAL MONOMERS (PARTS) | POLYFUNCTIONAL MONOMERS (PARTS) | OTHER COMPONENTS (PARTS) | TOTAL-AMOUNT OF POLAR MONOMERS (PARTS) | CONTENT OF POLAR MONOMERS (%) | THICK-NESS OF ADHESIVE LAYER (μm) | SOLVENT INSOLUBLE MATTER RATE (%) | EVALUATION 1 PRESSING TEST (N/cm²) | EVALUATION 2 DROP TEST (23°C) |
|---|---|---|---|---|---|---|---|---|---|---|
| 1 | I | - | HDDA (0.07) | GB (9) | 10 | 10.0 | 200 | 63 | 28 | GOOD |
| 2 | II | AA (3) | HDDA (0.12) | FIRST POLYMER (B) (10) | 11.5 | 11.2 | 200 | 62 | 39 | GOOD |
| 3 | II | AA (3) | HDDA (0.12) | FIRST POLYMER (B) (15) | 11.5 | 11.2 | 145 | 55 | 33 | GOOD |
| 4 | II | AA (3) | HDDA (0.12) | GROUND CALCIUM CARBONATE(80) | 11.5 | 11.2 | 156 | 94 | 38 | GOOD |
| 5 | II | AA (3) | HDDA (0.025) | | 11.5 | 11.2 | 140 | 60 | 30 | GOOD |
| 6 | II | AA (3) | HDDA (0.12) | SECOND POLYMER (B)(15) | 11.5 | 11.2 | 145 | 77 | 33 | GOOD |
| 7 | II | AA (3) | HDDA (0.12) | FIRST POLYMER (B) (5) | 11.5 | 11.2 | 148 | 79 | 42 | GOOD |
| 8 | II | AA (4) | HDDA (0.025) | | 12.5 | 12.0 | 146 | 59 | 31 | GOOD |
| 9 | II | AA (5) | DPHA (0.05) | | 13.5 | 12.9 | 204 | 66 | 42 | GOOD |
| 10 | II | AA (5) | HDDA (0.025) | | 13.5 | 12.9 | 138 | 60 | 33 | GOOD |
| 11 | II | AA (5) | DPHA (0.05) | PRECIPITATED CALCIUM CARBONATE (40) | 13.5 | 12.9 | 217 | 76 | 40 | GOOD |
| 12 | I | NVP (4) | HDDA (0.035) | | 14 | 13.5 | 194 | 75 | 29 | GOOD |
| 13 | I | NVP (8) | HDDA (0.035) | | 18 | 16.7 | 194 | 76 | 41 | GOOD |
| 14 | III | - | HDDA (0.12) | | 22 | 22.0 | 144 | 82 | 34 | GOOD |
| 15 | III | AA (1) | HDDA (0.025) | | 23 | 22.8 | 149 | 80 | 37 | GOOD |

Table 2

| EXAMPLE | SYRUP (100 PARTS) | ADDITIONAL MONOMERS (PARTS) | POLYFUNCTIONAL MONOMERS (PARTS) | OTHER COMPONENTS (PARTS) | TOTAL-AMOUNT OF POLAR MONOMERS (PARTS) | CONTENT OF POLAR MONOMERS (%) | THICKNESS OF ADHESIVE LAYER ($\mu$m) | SOLVENT INSOLUBLE MATTER RATE (%) | EVALUATION 1 PRESSING TEST (N/cm$^2$) | EVALUATION 2 DROP TEST (23°C) |
|---|---|---|---|---|---|---|---|---|---|---|
| 16 | III | AA (2) | HDDA (0.025) | | 24 | 23.5 | 143 | 83 | 43 | GOOD |
| 17 | III | AA (3) | HDDA (0.025) | | 25 | 24.3 | 143 | 81 | 45 | GOOD |
| 18 | III | AA (4) | HDDA (0.025) | | 26 | 25.0 | 145 | 82 | 52 | GOOD |
| 19 | III | AA (4) | HDDA (0.025) | BLACK PIGMENT (0.3) | 26 | 25.0 | 200 | 35 | 29 | GOOD |
| 20 | III | AA (4) | HDDA (0.03) | BLACK PIGMENT (0.8) | 26 | 25.0 | 207 | 41 | 31 | GOOD |
| 21 | III | AA (4) | HDDA (0.03) | BLACK PIGMENT (1) | 26 | 25.0 | 207 | 14 | 41 | GOOD |
| 22 | III | AA (4) | HDDA (0.05) | BLACK PIGMENT (1) | 26 | 25.0 | 206 | 41 | 41 | GOOD |
| 23 | III | AA (4) | HDDA (0.07) | BLACK PIGMENT (1) | 26 | 25.0 | 209 | 55 | 43 | GOOD |
| 24 | III | AA (4) | HDDA (0.056) | BLACK PIGMENT (0.8) GB(4) | 26 | 25.0 | 212 | 56 | 35 | GOOD |
| 25 | III | AA (4) | HDDA (0.03) | BLACK PIGMENT (0.8) H31 (10) | 26 | 25.0 | 205 | 23 | 35 | GOOD |
| 26 | III | AA (4) | HDDA (0.08) | BLACK PIGMENT (0.8 HYDROGENATED RESIN (10) | 26 | 25.0 | 204 | 57 | 35 | GOOD |
| 27 | III | HEA(5) AA(3) | HDDA (0.025) | | 30 | 27.8 | 200 | 68 | 41 | GOOD |
| 28 | I (40 PARTS) | NVP(17) HEA(4) 2HEA(39) | HDDA (0.07) | BLACK PIGMENT (1) | 25 | 21.0 | 200 | 61 | 40 | GOOD |

EP 2 695 925 A1

| EXAMPLE | SYRUP (100 PARTS) | ADDITIONAL MONOMERS (PARTS) | POLYFUNCTIONAL MONOMERS (PARTS) | OTHER COMPONENTS (PARTS) | TOTAL-AMOUNT OF POLAR MONOMERS (PARTS) | CONTENT OF POLAR MONOMERS (%) | THICKNESS OF ADHESIVE LAYER ($\mu$m) | SOLVENT INSOLUBLE MATTER RATE (%) | EVALUATION 1 PRESSING TEST (N/cm$^2$) | EVALUATION 2 DROP TEST (23°C) |
|---|---|---|---|---|---|---|---|---|---|---|
| 29 | IV (66.7 PARTS) | NVP(17) HEA(4) 2HEA(12.3) | HDDA (0.07) | BLACK PIGMENT (1) | 25 | 21.0 | 200 | 59 | 38 | GOOD |

EP 2 695 925 A1

Table 3

| COMPAR-ATIVE EXAM-PLE | SYRUP (100 PARTS) | ADDITIONAL MONOMERS (PARTS) | POLYFUNC-TIONAL MONOMERS (PARTS) | OTHER COMPO-NENTS (PARTS) | TOTAL-AMOUNT OF POLAR MONOMERS (PARTS) | CONTENT OF POLAR MONOMERS (%) | THICK-NESS OF ADHESIVE LAYER (μm) | SOLVENT INSOLUBLE MATTER RATE (%) | EVALUATION 1 PRESSING TEST (N/cm²) | EVALUATION 2 DROP TEST (23°C) |
|---|---|---|---|---|---|---|---|---|---|---|
| 1 | II | — | DPHA (0.05) | | 8.5 | 8.5 | 200 | 69 | 15 | GOOD |
| 2 | II | — | DPHA (0.025) | GROUND CALCIUM CARBONATE (40) | 8.5 | 8.5 | 217 | 57 | 14 | GOOD |
| 3 | II | — | DPHA (0.05) | GB (20) | 8.5 | 8.5 | 210 | 68 | 16 | GOOD |
| 4 | II | HEA (16.5) AA(15) | HDDA (0.025) | | 40 | 30.4 | 200 | 78 | 34 | 9 TIMES |

Table 4

| EXAM-PLE | SYRUP (100 PARTS) | ADDITIO-NAL MONO-MERS (PARTS) | POLYFUNC-TIONAL MONOMERS (PARTS) | OTHER COMPO-NENTS (PARTS) | TOTAL-AMOUNT OF POLAR MONOMERS (PARTS) | CONTENT OF POLAR MONOMERS (%) | THICK-NESS OF ADHESIVE LAYER (μm) | SOLVENT INSOLUBLE MATTER RATE (%) |
|---|---|---|---|---|---|---|---|---|
| 30 | I | — | TMPTA (0. 2) | A THERMAL FOAMING AGENT 1 (30) | 10 | 10. 0 | 200 | 89 |
| 31 | I | — | TMPTA (0. 2) | A THERMAL FOAMING AGENT 1 (30) | 10 | 10. 0 | 150 | 89 |
| 32 | I | — | TMPTA (0. 2) | A THERMAL FOAMING AGENT 2 (30) | 10 | 10. 0 | 200 | 86 |
| 33 | I | — | TMPTA (0. 2) | A THERMAL FOAMING AGENT 2 (20) | 10 | 10. 0 | 188 (94×2) | 86 |

| EXAM-PLE | EVALUATION 1 | EVALUATION 2 | EVALUATION 3 | | | | |
|---|---|---|---|---|---|---|---|
| | | | INITIAL STATE (BEFORE HEATING) | | AFTER HEATING | | |
| | PRESSING TEST (N/cm²) | DROP TEST (23°C) | INITIAL ADHESIVE STRENGTH (N/20 mm) | EVALU-ATION | ADHESIVE STRENGTH AFTER HEATING (N/20 mm) | HEATING TEMPERA-TURE (°C) | EVALU-ATION |
| 30 | 38 | GOOD | 23 | A | 0. 1 | 140 | A |
| 31 | 40 | GOOD | 21 | A | 0. 1 | 140 | A |
| 32 | 40 | GOOD | 22 | A | 0. 1 | 120 | A |
| 33 | 32 | GOOD | 20 | A | 0. 3 | 120 | A |

The double-sided pressure-sensitive adhesive sheets of examples 1 to 29 had the pressure-sensitive adhesive layers that included the acrylic polymers (A) containing 9 to 30 mass% of building blocks derived from polar monomers. It is clear from tables 1 and 2 that these double-sided pressure-sensitive adhesive sheets had large push-out adhesive forces and high impactproof reliabilities (at 23 °C).

On the other hand, the double-sided pressure-sensitive adhesive sheets of comparative examples 1 to 3 had the pressure-sensitive adhesive layers that included the acrylic polymers (A) containing less than 9 mass% of building blocks derived from polar monomers. These double-sided pressure-sensitive adhesive sheets did not have sufficient push-out adhesive forces although the double-sided pressure-sensitive adhesive sheets had high impactproof reliabilities.

The double-sided pressure-sensitive adhesive sheet of comparative example 4 had the pressure-sensitive adhesive layer that included the acrylic polymers (A) containing more than 30 mass% of building blocks derived from polar monomers. The double-sided pressure-sensitive adhesive sheet of comparative example 4 did not have sufficient impactproof reliability although the double-sided pressure-sensitive adhesive sheet had a large push-out adhesive force.

As described earlier, the haze and the total luminous transmittance of the double-sided pressure-sensitive adhesive sheet of example 26 were 85 % and 3.4 %, respectively. The pressure-sensitive adhesive composition 26 used for forming the pressure-sensitive adhesive layer of the double-sided pressure-sensitive adhesive sheet included hydrogenated petroleum resin (softening point: 125 °C, Alcon P125 manufactured by Arakawa Chemical Industries, Ltd.) other than the acrylic polymer (A) (base polymer). Because the hydrogenated petroleum resin lacks compatibility with the acrylic polymer (A), the hydrogenated petroleum resin phase separated from the acrylic polymer (A) and diffused (dispersed) in the acrylic polymer (A). Namely, if the specific amount of the hydrogenated petroleum resin is added to the acrylic polymer (A), the light diffusion property improves. As a result, the ability of concealment (light-blocking effect) improves. The ability of concealment (light-blocking effect) of the prepared pressure-sensitive adhesive layer (double-sided pressure-sensitive adhesive sheet) may be improved by mixing the hydrogenated petroleum resin into the pressure-sensitive adhesive composition to improve the diffusion property utilizing the phase separation.

The push-out adhesive force of the double-sided pressure-sensitive adhesive sheet of example 1 was 28 N/cm$^2$ as represented in table 1. The pressure-sensitive adhesive composition 1 of example 1 prepared from the syrup I included an acrylic acid as polar monomers.

The push-out adhesive forces of the double-sided pressure-sensitive adhesive sheets of examples 12 and 13 were 29 N/cm$^2$ and 41 N/cm$^2$, respectively, as represented in table 1. The pressure-sensitive adhesive compositions 12 and 13 of examples 12 and 13 were prepared by adding N-vinyl-2-pyrrolidone (NVP) to the syrup I. Each of the pressure-sensitive adhesive compositions 12 and 13 included the NVP as polar monomers other than the acrylic acid. Namely, the acrylic acid (an example of carboxyl group-containing monomers) and the NVP (an example of heterocycle-containing vinyl monomers) were used in combination. If the acrylic acid and the NVP are used in combination as polar monomers, the push-out adhesive force of the prepared double-sided pressure-sensitive adhesive sheet (pressure-sensitive adhesive layer) increases in comparison to a configuration in which the acrylic acid and the NVP are not used in combination (i.e., only the acrylic acid is used). This configuration may be preferred.

In example 1, only the acrylic acid (AA) was used as polar monomers. In examples 2 to 11, the NVP, the HEAA, and the acrylic acid (AA) were used in combination as polar monomers. In examples 12 and 13, as described earlier, the acrylic acid (AA) and the NVP were used in combination. In example 14, the NVP and the HEA were used in combination as polar monomers. In examples 15 to 26, the NVP, the HEA and the acrylic acid (AA) were used in combination as polar monomers. In example 27, the NVP and HEA were used in combination as polar monomers. In example 28, the acrylic acid (AA), the NVP, and the HEA were used in combination as polar monomers. In example 29, the acrylic acid (AA), the NVP, and the HEA were used in combination as polar monomers.

The pressure-sensitive adhesive composition 28 of example 28 was prepared by adding 17 parts by mass of the NVP, 4 parts by mass of the HEA, and 39 parts by mass of the 2EHA to 40 parts by mass of the syrup I (2EHA/AA = 90/10) as monomer components. The pressure-sensitive adhesive composition 29 of example 29 was prepared by adding 17 parts by mass of the NVP, 4 parts by mass of the HEA, and 12.3 parts by mass of the 2EHA to 66.7 parts by mass of the syrup IV (2EHA/AA = 94/6) as monomer components. In examples 28 and 29, different syrups were used. However, ratios of components (ratios of mass) in compositions 28 and 19 were both 2EHA/AA/HEA/NVP = 75/4/4/17. The double-sided pressure-sensitive adhesive sheet of example 28 and the double-sided pressure-sensitive adhesive sheet of example 29 had the same levels of abilities (push-out adhesive forces, impactproof reliabilities) as represented in table 2. During preparation of pressure-sensitive adhesive compositions, even if how monomers are added is different from one another as in examples 28 and 29, physical properties of prepared pressure-sensitive adhesive layers (double-sided pressure-sensitive adhesive sheets) are less likely to be affected by how the monomers are added.

As represented in table 4, the double-sided pressure-sensitive adhesive sheets of examples 30 to 33 having the pressure-sensitive adhesive layers, each of which included either the thermal forming agent 1 or the thermal forming agent 2 had large push-out adhesive forces and high impactproof reliabilities (at 23 °C). The double-sided pressure-sensitive adhesive sheets of examples 30 to 33 had high strength of adhesion (180-degree peel adhesion) before heating (in the initial state) and had high easiness in removal/tear-off (detachability) after heating.

Content of Bubbles

The contents of bubbles in the pressure-sensitive adhesive layers of the double-sided pressure-sensitive adhesive sheets of examples 1 to 29 and comparative examples 1 to 4 were all 1 volume% or lower.

The contents of bubbles in the pressure-sensitive adhesive layers of the double-sided pressure-sensitive adhesive sheets of examples 30 to 33 (before heating) were all 1 volume% or lower.

**Claims**

1. A double-sided pressure-sensitive adhesive sheet comprising a pressure-sensitive adhesive layer including an acrylic polymer (A) containing 9 to 30 mass% of building blocks derived from at least one kind of polar monomer.

2. The double-sided pressure-sensitive adhesive sheet according to claim1, wherein the double-sided pressure-sensitive adhesive sheet is configured for use in a portable electronic device to fix a member installed in the portable electronic device.

3. The double-sided pressure-sensitive adhesive sheet according to claim 1 or 2, wherein the double-sided pressure-sensitive adhesive sheet has a shape selected from the group consisting of a tape shape, a slip shape, a U shape, an L shape, and a frame shape.

4. The double-sided pressure-sensitive adhesive sheet according to any one of claims 1 to 3, wherein the acrylic polymer (A) contains building blocks derived from (meth)acrylic acid alkyl ester including any one of a linear-chain alkyl group with a carbon number of 1 to 20 and a branched-chain alkyl group with a carbon number of 1 to 20.

5. The double-sided pressure-sensitive adhesive sheet according to any one of claims 1 to 4, wherein the at least one kind of polar monomer is selected from the group consisting of a carboxyl group-containing monomer, a hydroxyl group-containing monomer, an amide group-containing monomer, and a heterocycle-containing vinyl monomer.

6. The double-sided pressure-sensitive adhesive sheet according to any one of claims 1 to 5, wherein the acrylic polymer (A) contains building blocks derived from a polyfunctional monomer including at least two polymerizable functional groups.

7. The double-sided pressure-sensitive adhesive sheet according to any one of claims 1 to 6, wherein the pressure-sensitive adhesive layer has a content of bubbles equal to or lower than 3 volume% .

8. The double-sided pressure-sensitive adhesive sheet according to any one of claims 1 to 7, wherein the pressure-sensitive adhesive layer has a thickness of 90 $\mu$m to 1,500 $\mu$m.

9. The double-sided pressure-sensitive adhesive sheet according to any one of claims 1 to 8, wherein the pressure-sensitive adhesive layer further includes a thermal foaming agent.

10. A portable electronic device comprising a member fixed by the double-sided pressure-sensitive adhesive sheet according to any one of claims 1 to 9.

FIG.1

# FIG.2

FIG.3

## FIG.4

# FIG.5

FIG.6

## FIG.7

1.2m

Europäisches
Patentamt

European
Patent Office

Office européen
des brevets

# EUROPEAN SEARCH REPORT

**Application Number**

EP 13 17 9408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 186 867 A1 (NITTO DENKO CORP [JP]) 19 May 2010 (2010-05-19) | 1-8 | INV. C09J7/02 C09J133/08 C08K7/22 |
| A | * abstract; claims 1-7 * * paragraphs [0022], [0037] * | 9,10 | |
| X | EP 2 228 418 A1 (NITTO DENKO CORP [JP]) 15 September 2010 (2010-09-15) | 1 | |
| A | * abstract; claims 1-5 * | 2-10 | |
| X | EP 2 228 419 A1 (NITTO DENKO CORP [JP]) 15 September 2010 (2010-09-15) | 1 | |
| A | * abstract; claims 1-4 * | 2-10 | |
| X | EP 2 395 063 A2 (NITTO DENKO CORP [JP]) 14 December 2011 (2011-12-14) | 1,4 | |
| A | * abstract; claims 1-6 * | 2,3,5-10 | |
| X | EP 2 194 106 A1 (NITTO DENKO CORP [JP]) 9 June 2010 (2010-06-09) | 1,10 | |
| Y | * abstract; claims 1-3 * | 1-10 | TECHNICAL FIELDS SEARCHED (IPC) |
| X | EP 2 371 915 A1 (NITTO DENKO CORP [JP]) 5 October 2011 (2011-10-05) | 1,10 | C09J C08K C08L |
| Y | * abstract; claims 1-5 * | 1-10 | |
| Y | EP 2 256 174 A1 (NITTO DENKO CORP [JP]) 1 December 2010 (2010-12-01) * the whole document * | 1-5 | |
| A | EP 2 479 229 A1 (NITTO DENKO CORP [JP]) 25 July 2012 (2012-07-25) * the whole document * | 1-5 | |
| X,P | WO 2013/085066 A1 (NITTO DENKO CORP [JP]) 13 June 2013 (2013-06-13) * the whole document * | 1-9 | |

The present search report has been drawn up for all claims

| Place of search | Date of completion of the search | Examiner |
|---|---|---|
| The Hague | 23 October 2013 | Bergmans, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 17 9408

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2013

| Patent document cited in search report | | Publication date | Patent family member(s) | | Publication date |
|---|---|---|---|---|---|
| EP 2186867 | A1 | 19-05-2010 | CN | 101735737 A | 16-06-2010 |
| | | | EP | 2186867 A1 | 19-05-2010 |
| | | | JP | 2010116479 A | 27-05-2010 |
| | | | US | 2010119803 A1 | 13-05-2010 |
| EP 2228418 | A1 | 15-09-2010 | CN | 101831252 A | 15-09-2010 |
| | | | EP | 2228418 A1 | 15-09-2010 |
| | | | JP | 2010209263 A | 24-09-2010 |
| | | | US | 2010233467 A1 | 16-09-2010 |
| EP 2228419 | A1 | 15-09-2010 | CN | 101831251 A | 15-09-2010 |
| | | | EP | 2228419 A1 | 15-09-2010 |
| | | | JP | 2010209261 A | 24-09-2010 |
| | | | US | 2010233466 A1 | 16-09-2010 |
| EP 2395063 | A2 | 14-12-2011 | CN | 102220096 A | 19-10-2011 |
| | | | EP | 2395063 A2 | 14-12-2011 |
| | | | JP | 2011231319 A | 17-11-2011 |
| | | | KR | 20110113584 A | 17-10-2011 |
| | | | US | 2011250446 A1 | 13-10-2011 |
| EP 2194106 | A1 | 09-06-2010 | CN | 101747848 A | 23-06-2010 |
| | | | CN | 102224211 A | 19-10-2011 |
| | | | EP | 2194106 A1 | 09-06-2010 |
| | | | EP | 2371916 A1 | 05-10-2011 |
| | | | US | 2010143711 A1 | 10-06-2010 |
| | | | US | 2011223394 A1 | 15-09-2011 |
| | | | WO | 2010064358 A1 | 10-06-2010 |
| EP 2371915 | A1 | 05-10-2011 | CN | 102239226 A | 09-11-2011 |
| | | | EP | 2371915 A1 | 05-10-2011 |
| | | | JP | 2010132745 A | 17-06-2010 |
| | | | KR | 20110091531 A | 11-08-2011 |
| | | | US | 2011244230 A1 | 06-10-2011 |
| | | | WO | 2010064378 A1 | 10-06-2010 |
| EP 2256174 | A1 | 01-12-2010 | CN | 101978014 A | 16-02-2011 |
| | | | EP | 2256174 A1 | 01-12-2010 |
| | | | JP | 2009256607 A | 05-11-2009 |
| | | | US | 2011070434 A1 | 24-03-2011 |
| | | | WO | 2009116504 A1 | 24-09-2009 |
| EP 2479229 | A1 | 25-07-2012 | CN | 102498183 A | 13-06-2012 |
| | | | EP | 2479229 A1 | 25-07-2012 |
| | | | JP | 2011084732 A | 28-04-2011 |
| | | | KR | 20120073231 A | 04-07-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 13 17 9408

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2013

| Patent document cited in search report | Publication date | Patent family member(s) | | Publication date |
|---|---|---|---|---|
| | | US | 2012177901 A1 | 12-07-2012 |
| | | WO | 2011033736 A1 | 24-03-2011 |
| WO 2013085066 A1 | 13-06-2013 | JP | 2013121990 A | 20-06-2013 |
| | | WO | 2013085066 A1 | 13-06-2013 |

For more details about this annex : see Official Journal of the European Patent Office, No. 12/82

**EP 2 695 925 A1**